# EUROPEAN PATENT SPECIFICATION

(11) **EP 4 287 024 B1**
(45) Date of publication and mention of the grant of the patent: **25.11.2026**
(21) Application number: 21926159.1
(22) Date of filing: 22.02.2021
(51) Int. Cl.: G06F 9/50, G06F 9/48, G06F 9/52

(54) **MULTI-CORE PROCESSOR, MULTI-CORE PROCESSOR PROCESSING METHOD, AND RELATED DEVICE**
MEHRKERNPROZESSOR, MEHRKERNPROZESSORVERARBEITUNGSVERFAHREN UND ZUGEHÖRIGE VORRICHTUNG
PROCESSEUR MULTI-COEUR, PROCÉDÉ DE TRAITEMENT DE PROCESSEUR MULTICOEUR ET DISPOSITIF ASSOCIÉ

(43) Date of publication of application: 06.12.2023
(73) Proprietor: Huawei Technologies Co., Ltd., Shenzhen, Guangdong 518129 (CN)
(72) Inventor: ZHANG, Lei, Shenzhen, Guangdong 518129 (CN); XIAO, Xiao, Shenzhen, Guangdong 518129 (CN); YU, Zhengqiang, Shenzhen, Guangdong 518129 (CN)
(74) Representative: Pfenning, Meinig & Partner mbB
(86) International application number: PCT/CN2021/077230
(87) International publication number: WO 2022/174442

(56) References cited:
- CN-A- 102 098 503
- CN-A- 103 235 742
- CN-A- 103 885 826
- CN-A- 109 697 122
- US-A1- 2017 060 640
- US-A1- 2018 032 376
- KANOUN KARIM ET AL: "Online Energy-Efficient Task-Graph Scheduling for Multicore Platforms", IEEE TRANSACTIONS ON COMPUTER-AIDED DESIGN OF INTEGRATED CIRCUITS AND SYSTEMS, IEEE, USA, vol. 33, no. 8, 1 August 2014 (2014-08-01), pages 1194 - 1207, XP011553449, ISSN: 0278-0070, [retrieved on 20140715], DOI: 10.1109/TCAD.2014.2316094
- KANOUN KARIM ET AL: "A unified online directed acyclic graph flow manager for multicore schedulers", 2014 19TH ASIA AND SOUTH PACIFIC DESIGN AUTOMATION CONFERENCE (ASP-DAC), IEEE, 20 January 2014 (2014-01-20), pages 714 - 719, XP032570122, DOI: 10.1109/ASPDAC.2014.6742974
- PENG, MANMAN ET AL.: "Task Allocation and Load Balance on Multi-core Processors", MICROELECTRONICS & COMPUTER, vol. 28, no. 11, 30 November 2011 (2011-11-30), pages 35 - 39, XP055960537

## Description

### TECHNICAL FIELD

This application relates to the field of processor technologies, and in particular, to a multi-core processor, a multi-core processor processing method, and a related device.

### BACKGROUND

In graphics processing unit (Graphics Processing Unit, GPU) design, a job manager (Job Manager, JM) is configured to implement task scheduling and delivery (Kick-Off, KO) of multiple cores of a GPU. A driver development kit (Driver Development Kit, DDK) parses invocation of upper-layer applications (APPs) on a graphics/computing application programming interface (Application Programming Interface, API), encapsulates parsed invocation into tasks that can be identified and executed by the GPU, and delivers the tasks to the job manager on the GPU in a form of a task (task)/job chain (Job Chain, JC) or a command stream (Command Stream). The job manager identifies and splits the tasks encapsulated by the DDK, and delivers the tasks to the multiple cores of the GPU. The multiple cores of the GPU concurrently execute the tasks received by the multiple cores. The job manager is responsible for multi-core scheduling and is responsible for or participates in multi-process management, and this affects multi-core utilization. However, a conventional technical solution does not resolve a no-load problem of multi-core scheduling of the GPU.
KANOUN KARIM ET AL: "Online Energy-Efficient Task-Graph Scheduling for Multicore Platforms", IEEE TRANSACTIONS ON COMPUTER-AIDED DESIGN OF INTEGRATED CIRCUITS AND SYSTEMS, IEEE, USA, vol. 33, no. 8, 1 August 2014 (2014-08-01), pages 1194-1207, XP01 1553449, discloses directed acyclic graph (DAG) schedulers to enhance energy efficiency across multicore platform. It discusses an online scheduling approach for the general DAG model to dynamically adjust to application characteristics, making informed decisions to minimize deadline misses and optimize energy efficiency in real-time.

### SUMMARY

Embodiments of this application provide a multi-core processor, a multi-core processor processing method, and a related device, to resolve a no-load problem of multiple cores and improve multi-core scheduling performance.

The invention is defined in the appended set of claims. According to a first aspect, an embodiment of this application provides a multi-core processor, including a job manager and multiple processing cores coupled to the job manager. The job manager is configured to store multiple job chains and a dependency relationship between the multiple job chains, where the dependency relationship includes dependency and non-dependency. The job manager is further configured to: determine a first job chain and a second job chain in the multiple job chains based on the dependency relationship between the multiple job chains, where a dependency relationship between the first job chain and the second job chain is non-dependency, the first job chain includes one or more first tasks, and the second job chain includes one or more second tasks; schedule a part or all of the multiple processing cores to execute the one or more first tasks; and schedule at least one second task in the second job chain to at least one first processing core for execution when the at least one first processing core in the multiple processing cores is in an idle state. In this embodiment of this application, the multi-core processor may be a multi-core coprocessor such as a GPU or a neural network processing unit (Neural Network Processing Unit, NPU), and includes the job manager and the multiple processing cores coupled to the job manager. The job manager may maintain a dependency relationship between job chains, in other words, store the dependency relationship between the multiple job chains, and the job manager further stores the multiple job chains. In this way, the job manager may determine, in the multiple job chains, the first job chain and the second job chain whose dependency relationship is non-dependency. The first job chain includes the one or more first tasks, the second job chain includes the one or more second tasks, and the job manager may schedule the part or all of the multiple processing cores to execute the one or more first tasks in the first job chain. Because the dependency relationship between the first job chain and the second job chain is non-dependency, the first job chain and the second job chain may be executed concurrently, or the first task in the first job chain and the second task in the second job chain may be executed concurrently. The job manager schedules the at least one second task in the second job chain to the at least one first processing core for execution when the at least one first processing core in the multiple processing cores is in the idle state. The idle state is also referred to as a no-load state. To be specific, the processing core is not executing a task. The processing core in the idle state may be a processing core that is not scheduled to execute the first task in the first job chain, or may be a processing core that is in the no-load state after completing execution of the first task in the first job chain. In this way, in this embodiment of this application, once a processing core is in the no-load state, the processing core in the no-load state is immediately scheduled by the job manager to execute a task, to improve multi-core scheduling performance.

In a possible implementation, the job manager includes a dependency management unit and a task queue unit. The dependency management unit is configured to: store the dependency relationship between the multiple job chains; and send a first instruction to the task queue unit if determining that the dependency relationship between the first job chain and the second job chain is non-dependency, where the first instruction indicates that the dependency relationship between the first job chain and the second job chain is non-dependency. In this embodiment of this application, the job manager includes the dependency management unit and the task queue unit. Hardware implements dependency management between job chains. In other words, the dependency management unit may store a dependency relationship between the job chains, and software (namely, a DDK) does not need to participate in dependency management and control between the job chains. Therefore, interaction time of the software and the hardware is shortened, and invocation on a software side is omitted. In addition, after the dependency relationship between the job chains is released, to be specific, after the dependency relationship between the job chains is non-dependency or changes from dependency to non-dependency, the hardware quickly makes a response and can immediately schedule, to a processing core, the job chains whose dependency relationship is non-dependency. This is better than management on the software side. For example, the dependency management unit immediately sends the first instruction to the task queue unit if determining that the dependency relationship between the first job chain and the second job chain is non-dependency, and the task queue unit immediately delivers the first job chain and the second job chain to the processing core for execution.

In a possible implementation, the job manager further includes a task splitting unit and a multi-core management unit. The task queue unit is configured to: store the multiple job chains; and after receiving the first instruction sent by the dependency management unit, send the first job chain and the second job chain to the task splitting unit, and send a second instruction to the multi-core management unit, where the second instruction indicates the multi-core management unit to preempt a processing core for the first job chain and the second job chain. In this embodiment of this application, the job manager further includes the task splitting unit and the multi-core management unit. The task queue unit may store the multiple job chains. After receiving the first instruction sent by the dependency management unit, the job manager learns that the dependency relationship between the first job chain and the second job chain is non-dependency, and sends the first job chain and the second job chain to the task splitting unit; and sends the second instruction to the multi-core management unit, to instruct, by using the second instruction, the multi-core management unit to preempt the processing core for the first job chain and the second job chain. Because the task splitting unit may split the first job chain into the one or more first tasks and split the second job chain into the one or more second tasks, the multi-core management unit may preempt the processing core for the first job chain and the second job chain. This helps execute the first job chain and the second job chain.

In a possible implementation, the task splitting unit is configured to split the first job chain into the one or more first tasks. The multi-core management unit is configured to: preempt one or more second processing cores from the multiple processing cores based on the second instruction; and send, to the task splitting unit, a result of preempting the one or more second processing cores. The task splitting unit is further configured to schedule the one or more second processing cores to execute the one or more first tasks. In this embodiment of this application, the task splitting unit may split the first job chain into the one or more first tasks after receiving the first job chain. The second instruction may include a quantity of processing cores required for executing the first job chain, an identifier of a processing core specifically configured to execute the first job chain, or the like. After receiving the second instruction sent by the task queue unit, the multi-core management unit may preempt the one or more second processing cores from the multiple processing cores based on the second instruction, and send, to the task splitting unit, the result of preempting the one or more second processing cores. After splitting the first job chain into the one or more first tasks, and receiving the result of preempting, by the multi-core management unit, the one or more second processing cores for the first job chain, the task splitting unit schedules the one or more second processing cores to execute the one or more first tasks in the first job chain. This helps preempt a computing resource for executing the first job chain.

In a possible implementation, the task splitting unit is further configured to split the second job chain into the one or more second tasks. The multi-core management unit is further configured to: preempt the at least one first processing core based on the second instruction when the at least one first processing core in the multiple processing cores is in the idle state; and send, to the task splitting unit, a result of preempting the at least one first processing core. The task splitting unit is further configured to schedule the at least one second task in the one or more second tasks to the at least one first processing core for execution. In this embodiment of this application, the task splitting unit may split the second job chain into the one or more second tasks after receiving the second job chain. After the task splitting unit schedules the last first task in the first job chain to a second processing core in the one or more second processing cores for execution, the multi-core management unit may preempt the processing core for executing the second task in the second job chain. The second instruction may include a quantity of processing cores required for executing the second job chain, an identifier of a processing core specifically configured to execute the second job chain, or the like. After that, provided that at least one first processing core in the multiple processing cores is in the idle state, the multi-core management unit preempts the at least one first processing core based on the second instruction, and sends, to the task splitting unit, a result of preempting the at least one first processing core. The task splitting unit may schedule the at least one second task in the one or more second tasks to the at least one first processing core for execution. In this way, hardware (the multi-core management unit) releases and applies for processing cores at a granularity of multiple processing cores, and each processing core is managed independently. After a processing core completes a task belonging to the processing core in a job chain, the processing core is released immediately, and a computing resource used by the processing core to execute another job chain is re-applied for. Compared with unified release and application operations performed on multiple processing cores by using a job chain as a boundary, this management manner greatly reduces or even eliminates a no-load problem of a part of processing cores, and improves processing core utilization efficiency.

In a possible implementation, the job manager further includes a task assembling unit. The task assembling unit is configured to: obtain a command stream and a dependency relationship between a part or all of the multiple job chains, and generate the part or all of the multiple job chains based on the command stream; and send the part or all of the multiple job chains to the task queue unit, and send the dependency relationship between the part or all of the multiple job chains to the dependency management unit. In this embodiment of this application, software (a DDK) may deliver a task to the multi-core processor in a form of a command stream, and the task assembling unit in the multi-core processor may receive the command stream and receive the dependency relationship between the part or all of the multiple job chains; generate the part or all of the multiple job chains based on the command stream; and send the part or all of the multiple job chains to the task queue unit, and send the dependency relationship between the part or all of the multiple job chains to the dependency management unit. In this way, when the software (the DDK) delivers the task in the form of a command stream, multi-core scheduling can also be implemented.

According to a second aspect, an embodiment of this application provides a multi-core processor processing method, applied to a multi-core processor, where the multi-core processor includes a job manager and multiple processing cores coupled to the job manager; and the method includes: storing multiple job chains and a dependency relationship between the multiple job chains by using the job manager, where the dependency relationship includes dependency and non-dependency; determining a first job chain and a second job chain in the multiple job chains based on the dependency relationship between the multiple job chains by using the job manager, where a dependency relationship between the first job chain and the second job chain is non-dependency, the first job chain includes one or more first tasks, and the second job chain includes one or more second tasks; scheduling, by using the job manager, a part or all of the multiple processing cores to execute the one or more first tasks; and scheduling, by using the job manager, at least one second task in the second job chain to at least one first processing core for execution when the at least one first processing core in the multiple processing cores is in an idle state.

In a possible implementation, the job manager includes a dependency management unit and a task queue unit; the storing a dependency relationship between the multiple job chains by using the job manager includes: storing the dependency relationship between the multiple job chains by using the dependency management unit in the job manager; and the determining a first job chain and a second job chain in the multiple job chains based on the dependency relationship between the multiple job chains by using the job manager includes: sending a first instruction to the task queue unit by using the dependency management unit in the job manager if determining, by using the dependency management unit in the job manager, that the dependency relationship between the first job chain and the second job chain is non-dependency, where the first instruction indicates that the dependency relationship between the first job chain and the second job chain is non-dependency.

In a possible implementation, the job manager further includes a task splitting unit and a multi-core management unit; the storing multiple job chains by using the job manager includes: storing the multiple job chains by using the task queue unit in the job manager; and the determining a first job chain and a second job chain in the multiple job chains based on the dependency relationship between the multiple job chains by using the job manager further includes: after receiving, by using the task queue unit in the job manager, the first instruction sent by using the dependency management unit in the job manager, sending the first job chain and the second job chain to the task splitting unit by using the task queue unit in the job manager, and sending a second instruction to the multi-core management unit, where the second instruction indicates the multi-core management unit to preempt a processing core for the first job chain and the second job chain.

In a possible implementation, the scheduling, by using the job manager, a part or all of the multiple processing cores to execute the one or more first tasks includes: splitting the first job chain into the one or more first tasks by using the task splitting unit in the job manager; preempting one or more second processing cores from the multiple processing cores based on the second instruction by using the multi-core management unit in the job manager; sending, to the task splitting unit by using the multi-core management unit in the job manager, a result of preempting the one or more second processing cores; and scheduling, by using the task splitting unit in the job manager, the one or more second processing cores to execute the one or more first tasks.

In a possible implementation, the scheduling, by using the job manager, at least one second task in the second job chain to at least one first processing core for execution when the at least one first processing core in the multiple processing cores is in an idle state includes: splitting the second job chain into the one or more second tasks by using the task splitting unit in the job manager; preempting the at least one first processing core based on the second instruction by using the multi-core management unit in the job manager when the at least one first processing core in the multiple processing cores is in the idle state; sending, to the task splitting unit by using the multi-core management unit in the job manager, a result of preempting the at least one first processing core; and scheduling, by using the task splitting unit in the job manager, the at least one second task in the one or more second tasks to the at least one first processing core for execution.

In a possible implementation, the job manager further includes a task assembling unit; and the method further includes: obtaining a command stream and a dependency relationship between a part or all of the multiple job chains by using the task assembling unit in the job manager, and generating the part or all of the multiple job chains based on the command stream; and sending the part or all of the multiple job chains to the task queue unit by using the task assembling unit in the job manager, and sending the dependency relationship between the part or all of the multiple job chains to the dependency management unit.

According to a third aspect, this application provides a semiconductor chip, which may include the multi-core processor provided in any implementation of the first aspect.

According to a fourth aspect, this application provides a semiconductor chip, which may include the multi-core processor provided in any implementation of the first aspect, and an internal memory and an external memory that are coupled to the multi-core processor.

According to a fifth aspect, this application provides a system-on-chip SoC chip. The SoC chip includes the multi-core processor provided in any implementation of the first aspect, and an internal memory and an external memory that are coupled to the multi-core processor. The SoC chip may include a chip, or may include a chip and another discrete component.

According to a sixth aspect, this application provides a chip system. The chip system includes the multi-core processor provided in any implementation of the first aspect. In a possible design, the chip system further includes a memory, and the memory is configured to store necessary or related program instructions and data in a running process of the multi-core processor. The chip system may include a chip, or may include a chip and another discrete component.

According to a seventh aspect, this application provides a processing apparatus. The processing apparatus has a function of implementing any multi-core processor processing method in the second aspect. The function may be implemented by hardware, or may be implemented by hardware executing corresponding software. The hardware or the software includes one or more modules corresponding to the function.

According to an eighth aspect, this application provides a terminal. The terminal includes a multi-core processor, and the multi-core processor is the multi-core processor provided in any implementation of the first aspect. The terminal may further include a memory. The memory is configured to be coupled to the multi-core processor, and store program instructions and data that are necessary for the terminal. The terminal may further include a communication interface, used by the terminal to communicate with another device or a communication network.

According to a ninth aspect, this application provides a computer-readable storage medium, where the computer-readable storage medium stores a computer program, and when the computer program is executed by a multi-core processor, the multi-core processor processing method procedure according to any implementation of the second aspect is implemented.

According to a tenth aspect, an embodiment of this application provides a computer program. The computer program includes instructions, and when the computer program is executed by a multi-core processor, the multi-core processor is enabled to perform the multi-core processor processing method procedure according to any implementation of the second aspect.

### BRIEF DESCRIPTION OF DRAWINGS

FIG. 1 is a schematic diagram of an architecture of a multi-core scheduling system according to an embodiment of this application;
FIG. 2 is a schematic diagram of a scheduling execution process of a job chain according to an embodiment of this application;
FIG. 3 is a schematic diagram of an architecture of another multi-core scheduling system according to an embodiment of this application;
FIG. 4 is a schematic diagram of another scheduling execution process of a job chain according to an embodiment of this application;
FIG. 5 is a schematic flowchart of multi-core scheduling according to an embodiment of this application; and
FIG. 6 is a schematic flowchart of a multi-core processor processing method according to an embodiment of this application.

### DESCRIPTION OF EMBODIMENTS

The following describes embodiments of this application with reference to the accompanying drawings in embodiments of this application. The terms such as "first", "second", "third", and "fourth" in the specification, claims, and the accompanying drawings of this application are intended to distinguish between different objects, but are not intended to describe a specific order. In addition, the terms such as "including" and "having" and any other variants thereof are intended to cover a non-exclusive inclusion. For example, a process, a method, a system, a product, or a device that includes a series of steps or units is not limited to the listed steps or units, but optionally further includes unlisted steps or units, or optionally further includes another inherent step or unit of the process, the method, the product, or the device. "An embodiment" mentioned in the specification indicates that a particular characteristic, structure or feature described with reference to this embodiment may be included in at least one embodiment of this application. The phrase appearing at various locations in this specification does not necessarily refer to a same embodiment, and is not an independent or alternative embodiment mutually exclusive to another embodiment. It is explicitly and implicitly understood by a person skilled in the art that embodiments described in this specification may be combined with another embodiment.

The terms such as "component", "module", and "system" used in this specification indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated by using figures, both a computing device and an application that runs on the computing device may be components. One or more components may reside within the process and/or the execution thread, and the component may be located on one computer and/or distributed between two or more computers. In addition, the components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with another system by using the signal).

First, for ease of understanding embodiments of this application, a technical problem specifically to be resolved in this application is further proposed and analyzed.

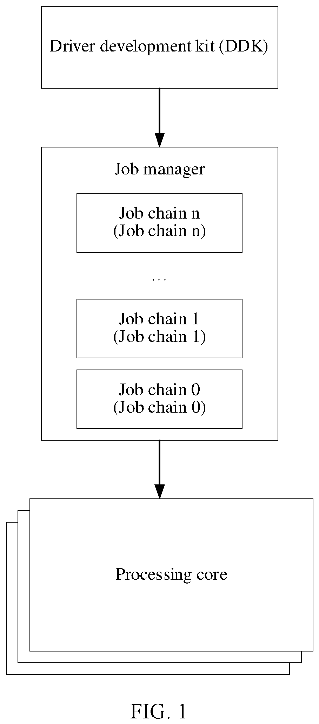

FIG. 1 is a schematic diagram of an architecture of a multi-core scheduling system according to an embodiment of this application. A job manager implements task and process scheduling management by using a job chain as a unit. The job chain is of a unidirectional linked list structure and is a set of a series of tasks. The job chain may be obtained by a driver development kit through assembly, and then delivered to the job manager. Alternatively, the job chain is assembled in the job manager. Software (namely, the DDK) maintains a dependency relationship between job chains. The job manager does not sense the dependency relationship between the job chains, and the job manager preserves a fixed order to execute the job chains delivered by the software. To be specific, upper-layer applications (APPs) specify the dependency relationship between the job chains, and the DDK is responsible for parsing and maintaining the dependency relationship between the job chains. Logically, the DDK is at a lower layer of the APPs. The dependency relationship may be understood as that execution of a job chain needs to be based on execution or completion of execution of another job chain. In terms of interaction between the DDK and hardware, tasks specified by the upper-layer applications (APPs) are divided into different types of job chains, for example, binning, render, compute, raytracing, and transfer. The several different types of tasks may be concurrently scheduled and executed on the hardware. If several job chains all belong to the same type divided above, the job chains are referred to as job chains of the same type. For the job chains of the same type, the job manager schedules to execute a next job chain only after execution of a previous job chain is completed. Therefore, scheduling execution of the job chains of the same type has the following disadvantages.
(1) If load of a job chain is excessively small, a part of processing cores are in a no-load state during execution of the job chain, but cannot be configured to execute a next job chain in advance. Specifically, according to an execution order, it is assumed that job chains are divided into a previously executed job chain and a latter executed job chain, and execution time of the job chain is related to a task executed for the longest time in the job chain. Execution time of tasks in the job chain is different, and processing cores configured to execute the task in the previously executed job chain consume inconsistent time for completing execution of the task. Execution time of some processing cores is short, and execution time of some processing cores is long. After completing execution of the task in the previously executed job chain, a processing core with short execution time needs to wait for a processing core with long execution time to complete execution of the task in the previously executed job chain. Before execution of the previously executed job chain is completed, the processing core with the short execution time is always in the no-load state, but cannot be configured to execute the latter executed job chain. As a result, a part of processing cores are idle (IDLE) for a long period of time before the latter executed job chain starts to be executed, and hardware performance is wasted.
(2) In view of test data, performance losses of a part of benchmark (benchmark) test sequences/key frames are large. Many organizations/institutions provide well-written test sequences for evaluating GPU performance. For example, a common test sequence is GFX benchmark/3DMARK. Actual GPU performance is based on a result of the foregoing benchmark test.

In conclusion, a conventional technical solution does not resolve a no-load problem of multi-core scheduling. In particular, for a job chain with light load, a performance loss is serious because a part of processing cores have a long no-load time.

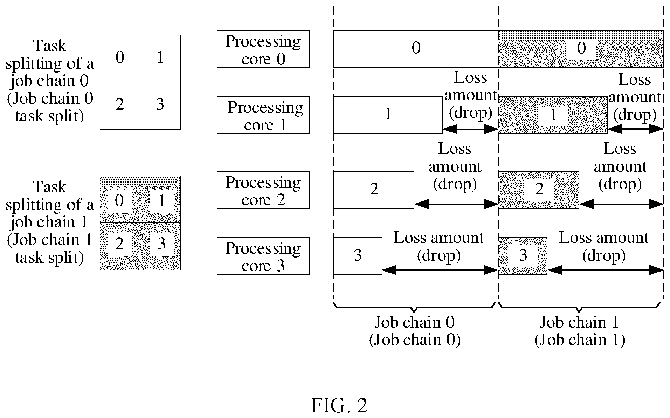

FIG. 2 is a schematic diagram of a scheduling execution process of a job chain according to an embodiment of this application. FIG. 2 is briefly described as follows.
(1) It is assumed that a job chain 0 (Job chain 0) and a job chain 1 (Job chain 1) each may be split into tasks (tasks) 0 to 3 and each may have four tasks in total. The job chain 0 and the job chain 1 are job chains of a same type, and a dependency relationship between the job chain 0 and the job chain 1 is non-dependency.
(2) For ease of description, it is assumed that a multi-core processor is of a 4-core structure, to be specific, the multi-core processor includes processing cores 0 to 3.
(3) A job manager first delivers the four tasks in the job chain 0 to the processing cores 0 to 3 for execution. For example, the task 0 in the job chain 0 is delivered to the processing core 0 for execution, the task 1 in the job chain 0 is delivered to the processing core 1 for execution, the task 2 in the job chain 0 is delivered to the processing core 2 for execution, and the task 3 in the job chain 0 is delivered to the processing core 3 for execution.
(4) After all of the processing cores 0 to 3 complete execution of the four tasks in the job chain 0, execution of the job chain 0 is completed. The job manager delivers the four tasks in the job chain to the processing cores 0 to 3 for execution. For example, the task 0 in the job chain is delivered to the processing core 0 for execution, the task 1 in the job chain is delivered to the processing core 1 for execution, the task 2 in the job chain is delivered to the processing core 2 for execution, and the task 3 in the job chain is delivered to the processing core 3 for execution.
(5) For execution of any job chain, load between tasks is inconsistent, and time for multiple processing cores to execute the tasks in the job chain is different. Therefore, a case in which a part of processing cores are in a no-load state exists. For example, the no-load case exists when the processing core 1 executes the tasks 1 in the job chain 0 and the job chain 1, the processing core 2 executes the tasks 2 in the job chain 0 and the job chain 1, or the processing core 3 executes the tasks 3 in the job chain 0 and the job chain 1. No-load time of the processing core is a loss amount (drop) of hardware performance, and results in a performance loss of the processing core.

Therefore, in this application, a no-load problem between multiple cores in a job chain scheduling process needs to be resolved, and performance of multi-core scheduling needs to be improved.

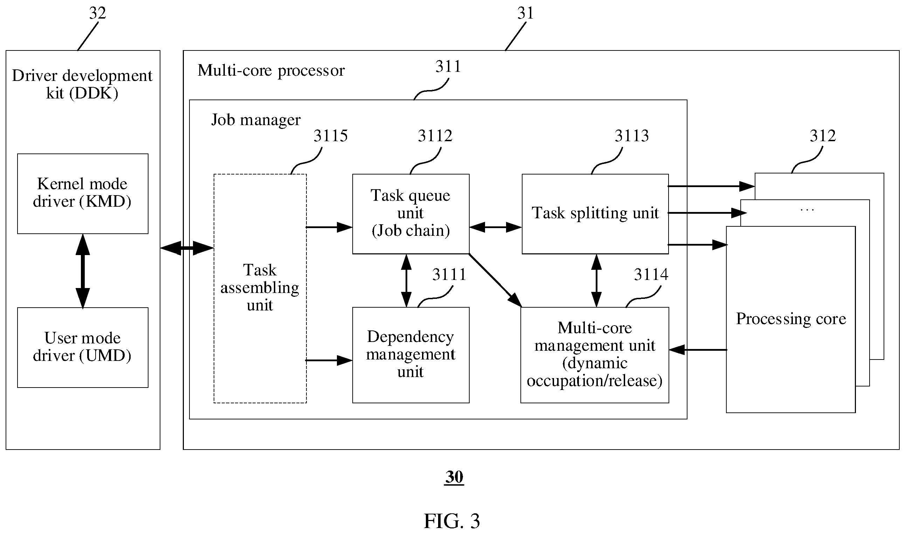

Based on the foregoing descriptions, this application provides a multi-core scheduling system. FIG. 3 is a schematic diagram of an architecture of a multi-core scheduling system 30 according to an embodiment of this application. The multi-core scheduling system 30 includes a multi-core processor 31 and a driver development kit (DDK) 32. The multi-core processor 31 may be a multi-core coprocessor such as a GPU or a neural network processing unit (Neural Network Processing Unit, NPU). The multi-core processor 31 may specifically include a job manager 311 and multiple processing cores 312 coupled to the job manager 311. The job manager 311 is configured to store multiple job chains and a dependency relationship between the multiple job chains, where the dependency relationship includes dependency and non-dependency. The job manager 311 is further configured to: determine a first job chain and a second job chain in the multiple job chains based on the dependency relationship between the multiple job chains, where a dependency relationship between the first job chain and the second job chain is non-dependency, the first job chain includes one or more first tasks, and the second job chain includes one or more second tasks; schedule a part or all of the multiple processing cores 312 to execute the one or more first tasks; and schedule at least one second task in the second job chain to at least one first processing core for execution when the at least one first processing core in the multiple processing cores 312 is in an idle state.

The job manager 311 is applied to task delivery of the multiple processing cores 312 of the multi-core processor 31 and scheduling management of the multiple processing cores 312, and is a management unit of the multi-core processor 31.

The driver development kit 32 includes a user mode driver (User Mode Driver, UMD) and a kernel mode driver (Kernel Mode Driver, KMD).

The multiple job chains stored in the job manager 311 mean that the driver development kit 32 parses invocation of upper-layer applications (APPs) on an API, and transfers a task to the job manager 311 on the multi-core processor 31. The driver development kit 32 may directly complete task assembly, and deliver the task to the job manager 311 in a form of a job chain. The driver development kit 32 may alternatively hand over task assembly or work to the job manager 311, and deliver the tasks to the job manager 311 in a form of a command stream. The job manager 311 obtains a job chain by assembling the tasks based on the command stream. In addition, the driver development kit 32 further delivers a dependency relationship between job chains to the job manager 311, and the dependency relationship between the job chains includes dependency and non-dependency.

In a conventional technology, the dependency relationship between the job chains is maintained in software (the driver development kit 32), and the multi-core processor 31 cannot learn of the dependency relationship between the job chains. For job chains of a same type, the job manager schedules to execute a latter executed job chain only after execution of a previously executed job chain is completed. Therefore, a part of processing cores in the multi-core processor have a no-load time period.

In this application, a new multi-core scheduling solution is proposed by considering the disadvantage of the conventional multi-core scheduling solution. Compared with the conventional technology, in the technical solution provided in this application, the dependency relationship between the job chains is maintained on hardware, in other words, the dependency relationship between the job chains is maintained on the multi-core processor 31, and specifically, the dependency relationship between the job chains is maintained on the job manager 311. Because the job manager 311 may learn of the dependency relationship between the job chains, the job manager 311 may deliver, to the processing core 312 for execution in advance, tasks in job chains whose dependency relationship is non-dependency, so that the processing core is not in a no-load state. For any two job chains, when the two job chains are delivered to the job manager 311 or are obtained through assembly in the job manager 311, a dependency relationship between the two job chains may be non-dependency. In other words, the dependency relationship between the two job chains is non-dependency at the beginning, and the two job chains can be directly scheduled for execution. When the two job chains are delivered to the job manager 311 or are obtained through assembly in the job manager 311, a dependency relationship between the two job chains may alternatively be dependency, and later the dependency relationship between the two job chains is released. In other words, the dependency relationship between the two job chains is dependency at the beginning, and later changes to non-dependency. After the dependency relationship between the two job chains is released, the two job chains can be scheduled for execution. Specifically, in a process in which the job manager 311 schedules execution of job chains, if the job chains have no dependency, to be specific, a dependency relationship between the job chains is non-dependency, after a task in a previously executed job chain is delivered to a processing core, a task of a latter executed job chain is immediately scheduled and delivered to a processing core without waiting for completion of execution of the previously executed job chain. That is, a processing core that is in the no-load state is scheduled to the latter executed job chain for use.

For example, the dependency relationship between the first job chain and the second job chain is non-dependency, the first job chain starts to be executed earlier than the second job chain, the first job chain includes one or more first tasks, and the second job chain includes one or more second tasks. After the one or more first tasks are all delivered to a part or all of the multiple processing cores 312 for execution, provided that at least one first processing core in the multiple processing cores 312 is still in the idle state, at least one second task in the one or more second tasks is delivered to the at least one first processing core in the idle state for execution. The idle state is also referred to as a no-load state. To be specific, the processing core 312 is not executing a task. The processing core 312 in the idle state may be a processing core that is not scheduled to execute the first task in the first job chain. For example, a processing core configured to execute the first job chain is only a part of the multiple processing cores 312. If a processing core 312 that is not configured to execute the first task in the first job chain is in the idle state, the processing core 312 may be configured to execute the second task in the second job chain. Alternatively, the processing core 312 in the idle state may be a processing core that is in the no-load state after completing execution of the first task in the first job chain. For example, after completing execution of the first task, if a processing core 312 that is configured to execute the first task in the first job chain starts to be in the idle state, the processing core 312 may be immediately configured to execute the second task in the second job chain, and does not need to wait to be configured to execute the second task in the second job chain until execution of the first job chain is completed. Completing execution of the first job chain means that execution of all first tasks in the first job chain is completed, and one processing core 312 may execute at least one first task or at least one second task. It should be understood that a multi-core scheduling process in this application is a dynamic process. Further, if there is still a third job chain, and a dependency relationship between and the third job chain and the second job chain is non-dependency, execution start time of the third job chain is later than that of the second job chain, and the third job chain includes one or more third tasks. After the one or more second tasks are all delivered to the processing core 312 for execution, provided that there is a processing core 312 in the idle state in the multiple processing cores 312, at least one third task in the one or more third tasks is delivered to the processing core 312 in the idle state for execution. The processing core 312 configured to execute the third task may be a processing core 312 that is not configured to execute the first task or the second task, a processing core 312 that is in the no-load state after completing execution of the first task, or a processing core 312 that is in the no-load state after completing execution of the first task and completing execution of the second task. In this way, provided that each of the multiple processing cores 312 is in the idle state, the processing core 312 is immediately scheduled to execute a task in a next job chain. Therefore, this application can effectively resolve a no-load problem of the processing core, and improve multi-core scheduling performance.

The first job chain and the second job chain may be job chains of a same type, but a dependency relationship between the first job chain and the second job chain when the first job chain and the second job chain are delivered to the processing core for execution is non-dependency. The first job chain and the second job chain may alternatively be job chains of different types, and the dependency relationship may be considered as non-dependency. This is because job chains of different types may be concurrently executed.

It should be understood that bidirectional communication exists between the driver development kit 32 and the multi-core processor 31.
(1) The driver development kit 32 actively delivers a task to the multi-core processor 31.
(2) After completing the task, the multi-core processor 31 notifies the driver development kit 32 through interruption or by querying a register. Generally, interruption is friendly to efficient of the driver development kit 32.

In this embodiment of this application, the multi-core processor 31 includes the job manager 311 and the multiple processing cores 312 coupled to the job manager 311. The job manager 311 may maintain a dependency relationship between job chains, in other words, store the dependency relationship between the multiple job chains, and the job manager 311 further stores the multiple job chains. In this way, the job manager 311 may determine, in the multiple job chains, the first job chain and the second job chain whose dependency relationship is non-dependency. The first job chain includes the one or more first tasks, the second job chain includes the one or more second tasks, and the job manager 311 may schedule the part or all of the multiple processing cores 312 to execute the one or more first tasks in the first job chain. Because the dependency relationship between the first job chain and the second job chain is non-dependency, the first job chain and the second job chain may be executed concurrently, or the first task in the first job chain and the second task in the second job chain may be executed concurrently. The job manager 311 schedules the at least one second task in the second job chain to the at least one first processing core for execution when the at least one first processing core in the multiple processing cores 312 is in the idle state. In this way, in this embodiment of this application, once a processing core is in the no-load state, the processing core in the no-load state is immediately scheduled by the job manager 311 to execute a task, to improve multi-core scheduling performance.

In a possible implementation, the job manager 311 includes a dependency management unit 3111 and a task queue unit 3112. The dependency management unit 3111 is configured to: store the dependency relationship between the multiple job chains; and send a first instruction to the task queue unit 3112 if determining that the dependency relationship between the first job chain and the second job chain is non-dependency, where the first instruction indicates that the dependency relationship between the first job chain and the second job chain is non-dependency.

The job manager 311 includes the dependency management unit 3111 and the task queue unit 3112. The driver development kit 32 or the job manager 311 delivers the job chains to the task queue unit 3112, and delivers the dependency relationship between the job chains to the dependency management unit 3111. Specifically, the driver development kit 32 delivers the dependency relationship between the job chains to the job manager 311, to be specific, the driver development kit 32 delivers the dependency relationship between the job chains to the dependency management unit 3111 in the job manager 311. The dependency management unit 3111 may store the dependency relationship between the job chains. The driver development kit 32 delivers the job chains to the job manager 311, to be specific, the driver development kit 32 delivers the job chains to the task queue unit 3112 in the job manager 311. The task queue unit 3112 may be configured to store the job chains. In addition, the job chains obtained by the job manager 311 through assembly are also stored in the task queue unit 3112.

The dependency relationship between job chains delivered by the driver development kit 32 to the task queue unit 3112 or the job chains that are obtained by the job manager 311 through assembly and that are delivered and stored in the task queue unit 3112 may be dependency or may be non-dependency. In addition, when the dependency relationship between the job chains delivered to the task queue unit 3112 is dependency, the dependency relationship may be released along with execution of the job chains. The dependency management unit 3111 may maintain the dependency relationship between the job chains, and specifically record a change status of the dependency relationship between the job chains. Job chains that are delivered to the task queue unit 3112 and whose dependency relationship is non-dependency at the beginning may be executed immediately. In other words, the dependency management unit 3111 may notify the task queue unit 3112 that the job chains whose dependency relationship is non-dependency at the beginning can be executed. Job chains that are delivered to the task queue unit 3112 and whose dependency relationship is dependency at the beginning needs to be executed after the dependency is released. In other words, the dependency management unit 3111 records a dependency status of the job chains whose dependency relationship is dependency at the beginning. After determining that the dependency between the job chains whose dependency relationship is dependency at the beginning is released, the dependency management unit 3111 notifies the task queue unit 3112 that the job chains can be executed. For example, after determining that the dependency relationship between the first job chain and the second job chain is non-dependency, the dependency management unit 3111 notifies, by using the first instruction, the task queue unit 3112 that the dependency relationship between the first job chain and the second job chain is non-dependency. It should be understood that dependency releasing means that a dependency relationship changes from dependency to non-dependency. Each first instruction is for an independent job chain, and is used to notify the task queue unit 3112 whether execution of the job chain can be started.

When there is dependency between job chains, generally, the following two events may be depended on.
(1) Execution of a job chain may depend on completion of execution of one or more other job chains.
(2) Execution of a job chain may depend on completion of processing of an event of the DDK.

For example, it is assumed that execution of a job chain 1 depends on completion of execution of a job chain 0.
(1) After execution of the job chain 0 is completed, a feature value may be written to a semaphore buffer (buffer) (where this process is referred to as signal semaphore).
(2) The dependency management unit 3111 may poll (polling) semaphore, to obtain an expected value through polling at a time point, to be specific, obtain, through polling, a signal triggered by completion of execution of the job chain 0.
(3) In this case, the dependency management unit 3111 determines that execution of the job chain 1 can be started, and notifies the task queue unit 3112 that the job chain 1 can be delivered for execution. The job chain 0 may be the first job chain, and the job chain 1 may be the second job chain.

It should be understood that bidirectional communication exists between the dependency management unit 3111 and the task queue unit 3112.
(1) After determining that dependency between job chains is released, the dependency management unit 3111 notifies the task queue unit 3112 to deliver, for execution, the job chains whose dependency is released.
(2) After completing execution of a job chain, the task queue unit 3112 notifies the dependency management unit 3111 of semaphore. Dependency is divided into multiple types, such as a barrier (barrier), a fence (fence), semaphore (semaphore), and an event (event). For the semaphore, there are two events: polling (wait/polling) and writing (signal/write). After execution of a job chain is completed, an operation such as semaphore signal (semaphore signal) may be followed. Therefore, the dependency management unit 3111 needs to be notified. Although signal may be translated into writing, it does not mean that writing is performed from two values 0 and 1, and any value may be written. The signal action is to write a value to the buffer, and the written value may be any value according to a maintenance rule.

In this embodiment of this application, the job manager 311 includes the dependency management unit 3111 and the task queue unit 3112. The hardware implements dependency management between job chains. In other words, the dependency management unit 3111 may obtain and store a dependency relationship between the job chains, and the software (namely, the DDK) does not need to participate in dependency management and control between the job chains. Therefore, interaction time of the software and the hardware is shortened, and invocation on a software side is omitted. In addition, after the dependency relationship between the job chains is released, to be specific, after the dependency relationship between the job chains is non-dependency or changes from dependency to non-dependency, the hardware quickly makes a response and can immediately schedule, to a processing core, the job chains whose dependency relationship is non-dependency. This is better than management on the software side. For example, the dependency management unit 3111 immediately sends the first instruction to the task queue unit 3112 if determining that the dependency relationship between the first job chain and the second job chain is non-dependency, and the task queue unit 3112 immediately delivers the first job chain and the second job chain to the processing core for execution.

In a possible implementation, the job manager 311 further includes a task splitting unit 3113 and a multi-core management unit 3114. The task queue unit 3112 is configured to: store the multiple job chains; and after receiving the first instruction sent by the dependency management unit 3111, send the first job chain and the second job chain to the task splitting unit 3113, and send a second instruction to the multi-core management unit 3114, where the second instruction indicates the multi-core management unit 3114 to preempt a processing core for the first job chain and the second job chain.

The job manager 311 further includes the task splitting unit 3113 and the multi-core management unit 3114. The task queue unit 3112 stores the multiple job chains. In other words, the task queue unit 3112 manages multiple job chains of multiple processes. For example, the task queue unit 3112 may deliver, for execution, the first job chain and the second job chain whose dependency relationship is non-dependency.

Specifically, the task queue unit 3112 may deliver, to the task splitting unit 3113 for execution according to a specific policy, job chains whose dependency relationship is non-dependency or whose dependency is released. In addition, the multi-core management unit 3114 is notified to apply for a corresponding processing core for executing the job chains whose dependency relationship is non-dependency or whose dependency is released. For example, the dependency management unit 3111 notifies, by using the first instruction, the task queue unit 3112 that the dependency relationship between the first job chain and the second job chain is non-dependency. After receiving the first instruction, the task queue unit 3112 delivers the first job chain and the second job chain to the task splitting unit 3113, and notifies, by using the second instruction, the multi-core management unit 3114 to preempt the processing core 312 for the first job chain and the second job chain, to execute the first job chain and the second job chain. The task queue unit 3112 needs to notify, by using the second instruction, the multi-core management unit 3114 to respectively preempt which processing cores for the first job chain and the second job chain, and does not need to describe how to preempt the processing cores. This is because the multi-core management unit 3114 implements preemption by using a fixed policy. The second instruction used to preempt the processing core for the first job chain and the second job chain is sent for two times. For the first time of sending, the multi-core management unit 3114 is notified to preempt a processing core for the first job chain, and for the second time of sending, the multi-core management unit 3114 is notified to preempt a processing core for the second job chain.

The foregoing specific policy includes but is not limited to the following.
(1) It is possible that multiple job chains of multiple processes (APPs) have released dependency and obtain execution permission, and the task queue unit 3112 may schedule and deliver a job chain of a corresponding process only in a corresponding time slice when the software enables a time slice rotation function (where the function software may choose whether to enable the function).
(2) It is possible that multiple job chains of multiple processes (APPs) have released dependency and obtain execution permission, and priorities (priorities) of job chains specified by the multiple processes are different. When the software does not enable a time slice rotation function (where the function software may choose whether to enable the function), the task queue unit 3112 may grant a higher scheduling priority to a high-priority job chain, and block delivery of a low-priority job chain.
(3) Due to the limitation of hardware design, processing cores of some vendors cannot well support concurrent execution of some job chains (where for example, when binning/compute job chains are executed concurrently, execution is unbalanced due to a processing core scheduling policy). In this scenario, the task queue unit needs to manage delivery of the binning/compute job chains by using a preset policy, for example, deliver the job chains in an interleaved manner.

The multi-core management unit 3114 may implement dynamic preemption (or referred to as dynamic occupation) and dynamic release of the multiple processing cores 312. After a processing core completes execution of a task in a previously executed job chain, the multi-core management unit 3114 immediately releases the processing core and re-applies for preempting the processing core to execute a task in a latter executed job chain. For example, after a processing core completes execution of the first task in the first job chain, the multi-core management unit 3114 may immediately release the processing core from being configured to execute the first job chain, and re-apply for preempting the processing core to execute the second task in the second job chain. It should be understood that dynamic preemption is interpreted as that the processing core is occupied but may not be used. For example, in some cases, a processing core 312 preempted by the multi-core management unit 3114 for a job chain is not configured to execute a task in the job chain. The multi-core management unit 3114 directly releases the processing core 312. In this case, a release speed is fast.

It should be understood that bidirectional communication exists between the task queue unit 3112 and the task splitting unit 3113.
(1) The task queue unit 3112 delivers a job chain to the task splitting unit 3113.
(2) After completing task splitting, delivery, and execution of the job chain, the task splitting unit 3113 determines, based on whether the multi-core management unit 3114 has released all processing cores configured to execute the job chain, whether execution of the job chain is completed. When execution of any job chain is completed, the task queue unit 3112 needs to be notified.

In this embodiment of this application, the job manager 311 further includes the task splitting unit 3113 and the multi-core management unit 3114. The task queue unit 3112 may store multiple job chains. After receiving the first instruction sent by the dependency management unit 3111, the job manager 311 learns that the dependency relationship between the first job chain and the second job chain is non-dependency, and sends the first job chain and the second job chain to the task splitting unit 3113; and sends the second instruction to the multi-core management unit 3114, to instruct, by using the second instruction, the multi-core management unit 3114 to preempt the processing core for the first job chain and the second job chain. Because the task splitting unit 3113 may split the first job chain into the one or more first tasks and split the second job chain into the one or more second tasks, the multi-core management unit 3114 may preempt the processing core for the first job chain and the second job chain. This helps execute the first job chain and the second job chain.

In a possible implementation, the task splitting unit 3113 is configured to split the first job chain into the one or more first tasks. The multi-core management unit 3114 is configured to: preempt one or more second processing cores from the multiple processing cores 312 based on the second instruction; and send, to the task splitting unit 3113, a result of preempting the one or more second processing cores. The task splitting unit 3113 is further configured to schedule the one or more second processing cores to execute the one or more first tasks.

The task splitting unit 3113 performs task splitting on a job chain. For example, the task splitting unit 3113 splits the first job chain into the one or more first tasks. A rule for splitting the job chain may be splitting in a raster order (Raster order), a Z order (Z order), a U order (U order), a 3D cube (3D cube), or the like. The task splitting unit 3113 delivers, to a processing core 312 that is in the multi-core management unit 3114 and that has been preempted for the job chain, a task obtained through splitting, and the processing core 312 implements computing and execution of the task. For example, the multi-core management unit 3114 preempts one or more second processing cores from the multiple processing cores 312 to execute the first job chain. The one or more second processing cores may be a part or all of the multiple processing cores 312. The task splitting unit 3113 delivers, to the one or more second processing cores, the one or more first tasks obtained by splitting the first job chain. It should be understood that there is no specific relationship between the task split from the job chain and the processing core 312, and the task split from the job chain may be delivered to any processing core 312 that is specified by the driver development kit 32 for the job chain and that is configured to execute the job chain. For example, the one or more first tasks obtained by splitting the first job chain are randomly delivered to the one or more second processing cores.

A rule in which the multi-core management unit 3114 preempts a processing core for a job chain is as follows.
(1) A maximum quantity of processing cores 312 and specific processing cores 312 on which each job chain can be executed needs to be specified in advance by the driver development kit 32, and the driver development kit 32 delivers the specified processing cores to the task queue unit 3112. Generally, the driver development kit 32 specifies that the job chain can be executed on all processing cores 312. However, in a special scenario, when some job chains can be executed slowly in an asynchronous (async) manner, the driver development kit 32 may specify that the job chain is allowed to be executed only on several processing cores 312. For example, the driver development kit 32 specifies in advance that the first job chain can be executed on all or a part of multiple processing cores.

For example, two scenarios are described by using an example in which the multi-core processor 31 is a GPU.

In a first scenario, device virtualization may be performed on the GPU, so that the DDK can "view" multiple GPU instances (although there is only one GPU in the hardware essentially). For the multiple GPU instances, each GPU instance can view a different GPU core. For example, a GPU 0 instance can view only GPU cores 0 and 1, and a GPU 1 instance can view only GPU cores 2 to 5. In this case, the DDK needs to specify that a job chain can be executed only on the GPU cores 0 and 1 when scheduling the job chain to the GPU 0 instance, and needs to specify the GPU cores 2 to 5 when scheduling the job chain to the GPU 1 instance.

In a second scenario, users (APPs) may specify that some tasks are used in an asynchronous computing (async compute) scenario, and computing have a low requirement on real-time performance. In a possible implementation, the DDK estimates computing load of an async compute job chain based on a specific indicator, to allocate a corresponding quantity of GPU cores, to enable the async compute job chain not to be executed at full speed.

(2) When each job chain is scheduled, the multi-core management unit 3114 needs to be notified of which processing cores 312 (specified by the driver development kit 32) are applied for to execute the job chain, but whether application succeeds depends on whether a job chain executed before the job chain has released the processing cores 312.

The multi-core management unit 3114 and the task splitting unit 3113 may share a preemption status of the processing core 312 in real time. To be specific, the multi-core management unit 3114 sends the preemption status of the processing core 312 to the task splitting unit 3113 in real time. After completing task execution, any processing core 312 notifies the multi-core management unit 3114, and the multi-core management unit 2114 actively determines release and preemption of the processing core based on a scoreboard (scoreboard) maintained by the multi-core management unit 2114 and a task completion status. The scoreboard is located in the multi-core management unit 3114. To process dependency between job chains, the dependency management unit 3111 needs to learn of an event of completion of each job chain, and indirectly obtains information by using the scoreboard.

It should be understood that bidirectional communication exists between the task splitting unit 3113 and the multi-core management unit 3114.
(1) The task splitting unit 3113 is responsible for delivering a task to a processing core 312, but needs to query the scoreboard in the multi-core management unit 3114 to query for which processing cores have been preempted by the multi-core management unit, whether the processing cores can still receive tasks or execute tasks, and whether all processing cores configured to execute a job chain are released (where this indicates that execution of the job chain is completed).
(2) After delivering the task, the task splitting unit 3113 needs to write the scoreboard in the multi-core management unit 3114, and record task allocation on the processing core preempted by the multi-core management unit 3114.

In this embodiment of this application, the task splitting unit 3113 may split the first job chain into the one or more first tasks after receiving the first job chain. The second instruction may include a quantity of processing cores required for executing the first job chain, an identifier of a processing core specifically configured to execute the first job chain, or the like. After receiving the second instruction sent by the task queue unit 3112, the multi-core management unit 3114 may preempt the one or more second processing cores from the multiple processing cores 312 based on the second instruction, and send, to the task splitting unit 3113, the result of preempting the one or more second processing cores. After splitting the first job chain into the one or more first tasks, and receiving the result of preempting, by the multi-core management unit 3114, the one or more second processing cores for the first job chain, the task splitting unit 3113 schedules the one or more second processing cores to execute the one or more first tasks in the first job chain. This helps preempt a computing resource for executing the first job chain.

In a possible implementation, the task splitting unit 3113 is further configured to split the second job chain into the one or more second tasks. The multi-core management unit 3114 is further configured to: preempt the at least one first processing core based on the second instruction when the at least one first processing core in the multiple processing cores 312 is in the idle state; and send, to the task splitting unit 3113, a result of preempting the at least one first processing core. The task splitting unit 3113 is further configured to schedule the at least one second task in the one or more second tasks to the at least one first processing core for execution.

The task splitting unit 3113 may further split the second job chain into the one or more second tasks. After the task splitting unit 3113 schedules the one or more second processing cores to execute the one or more first tasks obtained by splitting the first job chain, the multi-core management unit 3114 may immediately preempt the processing core for executing the second job chain. In addition, when preempting the processing core for executing the second job chain, provided that there is a processing core 312 in the idle state, the multi-core management unit 3114 may preempt the processing core to execute the second job chain, where the processing core configured to execute the second job chain is the first processing core. It should be understood that, that the second job chain can be executed on all or a part of the multiple processing cores is also specified by the driver development kit 32 in advance. The processing core 312 in the idle state may be a processing core that is not scheduled to execute the first task in the first job chain. For example, a processing core configured to execute the first job chain is only a part of the multiple processing cores 312. If a processing core 312 that is not configured to execute the first task in the first job chain is in the idle state, the processing core 312 may be preempted by the multi-core management unit 3114 to execute the second task in the second job chain. Alternatively, the processing core 312 in the idle state may be a processing core that is in the no-load state after completing execution of the first task in the first job chain. For example, after completing execution of the first task, if a processing core 312 that is configured to execute the first task in the first job chain starts to be in the idle state, the processing core 312 may be immediately preempted by the multi-core management unit 3114 to execute the second task in the second job chain, and does not need to wait to be preempted by the multi-core management unit 3114 to execute the second task in the second job chain until execution of the first job chain is completed.

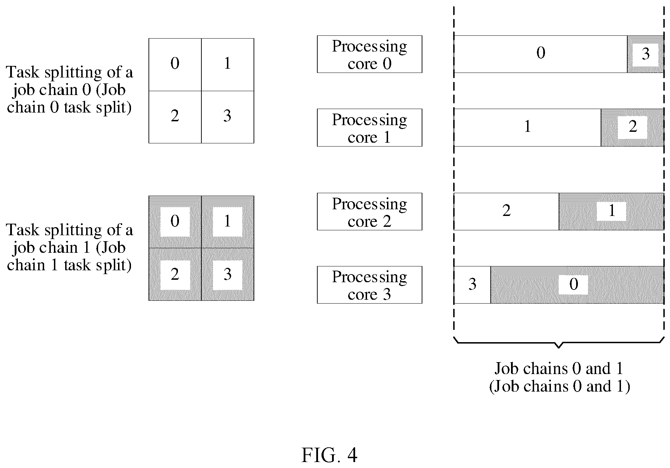

FIG. 4 is a schematic diagram of another scheduling execution process of a job chain according to an embodiment of this application. FIG. 4 is briefly described as follows.
(1) It is assumed that a job chain 0 and a job chain 1 each may be split into tasks 0 to 3 and each may have four tasks in total. The job chain 0 and the job chain 1 are job chains of a same type, and a dependency relationship between the job chain 0 and the job chain 1 is non-dependency.
(2) For ease of description, it is assumed that a multi-core processor is of a 4-core structure, to be specific, the multi-core processor includes processing cores 0 to 3.
(3) A job manager first delivers the four tasks in the job chain 0 to the processing cores 0 to 3 for execution. For example, the task 0 in the job chain 0 is delivered to the processing core 0 for execution, the task 1 in the job chain 0 is delivered to the processing core 1 for execution, the task 2 in the job chain 0 is delivered to the processing core 2 for execution, and the task 3 in the job chain 0 is delivered to the processing core 3 for execution.
(4) After any one of the processing cores 0 to 3 completes execution of the task in the job chain 0, the job manager immediately delivers the task in the job chain 1 to the processing core for execution. For example, after the processing core 3 completes execution of the task 3 in the job chain 0, the job manager immediately delivers the task 0 in the job chain 1 to the processing core 3 for execution. After the processing core 2 completes execution of the task 2 in the job chain 0, the job manager immediately delivers the task 1 in the job chain 1 to the processing core 2 for execution. After the processing core 1 completes execution of the task 1 in the job chain 0, the job manager immediately delivers the task 2 in the job chain 1 to the processing core 1 for execution. After the processing core 0 completes execution of the task 0 in the job chain 0, the job manager immediately delivers the task 3 in the job chain 1 to the processing core 0 for execution.

It should be understood that the job chain 0 may be a first job chain, and the job chain 1 may be a second job chain. Based on a scheduling feature in FIG. 4, job chains that have no dependency can be executed concurrently and scheduled in time, and a computing capability of a processing core is fully utilized, thereby reducing performance deterioration caused by a no-load phenomenon.

It should be noted that, in a process of splitting the second job chain, it is not necessary to consider whether a no-load loss of a first task in the first job chain needs to be completely compensated by a second task in the second job chain. During service execution, this effect has been achieved from a macro perspective. Reasons are as follows.
(1) A processing core 312 configured to execute release of the first job chain is preempted in time to execute the second job chain.
(2) For the first job chain and the second job chain, tasks in each job chain are delivered according to a balancing policy, to ensure that quantities of unfinished tasks on processing cores are basically equal.
(3) A task splitting policy in a job chain mainly considers a buffer location (buffer location).

It should be understood that a processing core is preempted only for execution of job chains of a same type, and a processing core is not preempted for execution of job chains of different types. This is because for two job chains of a same type, for example, two job chains of a compute type, the two job chains are divided into two types with a high priority and a low priority, namely, a high-priority job chain and a low-priority job chain. It is assumed that a driver development kit 32 specifies to preempt all processing cores for the high-priority job chain, and the driver development kit 32 specifies to preempt a part of processing cores for the low-priority job chain. When the high-priority job chain is executed, a multi-core management unit 3114 preempts all computing resources used to execute the low-priority job chain. The processing core 312 can view only a task in the high-priority job chain or only a task in the low-priority job chain, and cannot view the task in the high-priority job chain and the task in the low-priority job chain at the same time. However, when there is only one job chain of a same type, for example, when there is only one low-priority job chain of the compute type, and the driver development kit 32 specifies to preempt a part of processing cores for the low-priority job chain, the remaining part of processing cores may be dynamically scheduled to execute a job chain of another type, for example, dynamically scheduled to execute a job chain of a binning type.

In this embodiment of this application, a task splitting unit 3113 may split the second job chain into one or more second tasks after receiving the second job chain. After the task splitting unit 3113 schedules the last first task in the first job chain to a second processing core in one or more second processing cores for execution, the multi-core management unit 3114 may preempt the processing core for executing the second task in the second job chain. A second instruction may include a quantity of processing cores required for executing the second job chain, an identifier of a processing core specifically configured to execute the second job chain, or the like. After that, provided that at least one first processing core in multiple processing cores 312 is in an idle state, the multi-core management unit 3114 preempts the at least one first processing core based on the second instruction, and sends, to the task splitting unit 3113, a result of preempting the at least one first processing core. The task splitting unit 3113 may schedule at least one second task in the one or more second tasks to the at least one first processing core for execution. In this way, hardware (the multi-core management unit 3114) releases and applies for processing cores at a granularity of multiple processing cores 312, and each processing core is managed independently. After a processing core completes a task belonging to the processing core in a job chain, the processing core is released immediately, and a computing resource used by the processing core to execute another job chain is re-applied for. Compared with unified release and application operations performed on multiple processing cores 312 by using a job chain as a boundary, this management manner greatly reduces or even eliminates a no-load problem of a part of processing cores, and improves processing core utilization efficiency.

In a possible implementation, the job manager 311 further includes a task assembling unit 3115. The task assembling unit 3115 is configured to: obtain a command stream and a dependency relationship between a part or all of multiple job chains, and generate the part or all of the multiple job chains based on the command stream; and send the part or all of the multiple job chains to a task queue unit 3112, and send the dependency relationship between the part or all of the multiple job chains to a dependency management unit 3111.

In this scenario, the DDK inserts, into the command stream in sequence in a form of instructions, dependency specified in an API and dependency that is not specified in the API but is inferred by the DDK. The hardware executes the command stream, assembles a command in the command stream into a task (task), matches the dependency in the form of instructions to a corresponding job chain, and then delivers the job chain to a downstream module.

The driver development kit 32 may directly complete task assembly, and deliver the task to the job manager 311 in a form of a job chain. The driver development kit 32 may alternatively hand over task assembly or work to the task assembling unit 3115 in the job manager 311, and deliver the task to the task assembling unit 3115 in a form of a command stream. The task assembling unit 3115 obtains a job chain by assembling the task based on the command stream. In addition, the driver development kit 32 further delivers a dependency relationship between job chains to the task assembling unit 3115. After obtaining the job chain through assembly, the task assembling unit 3115 sends, to the task queue unit 3112, the job chain obtained through assembly, and sends, to the dependency management unit 3111, a dependency status of the job chain obtained through assembly. It may be understood that, according to work division of the driver development kit 32 and the multi-core processor 31, the task assembling unit 3115 may be optional.

In this embodiment of this application, software (the DDK) may deliver a task to the multi-core processor 31 in the form of a command stream, and the task assembling unit 3115 in the multi-core processor 31 may receive the command stream and receive the dependency relationship between the part or all of the multiple job chains; generate the part or all of the multiple job chains based on the command stream; and send the part or all of the multiple job chains to the task queue unit 3112, and send the dependency relationship between the part or all of the multiple job chains to the dependency management unit 3111. In this way, when the software (the DDK) delivers the task in the form of a command stream, multi-core scheduling can also be implemented.

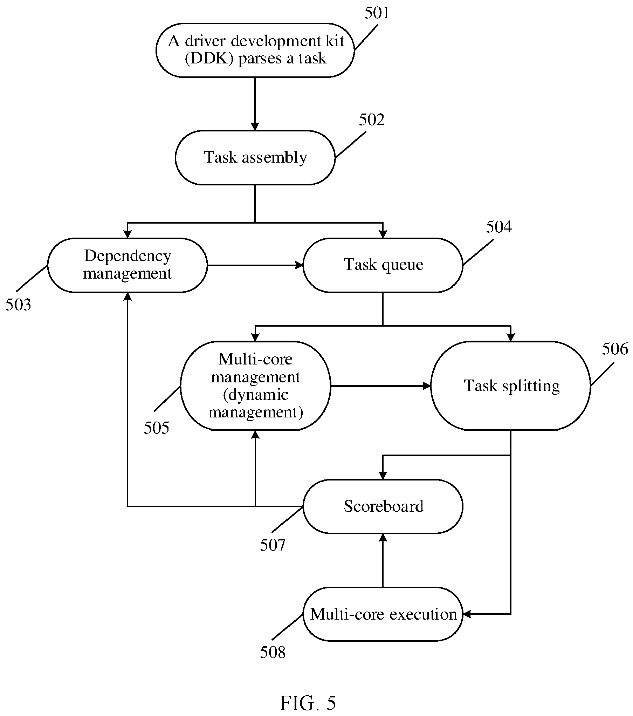

FIG. 5 is a schematic flowchart of multi-core scheduling according to an embodiment of this application. The schematic flowchart may be applied to the multi-core scheduling system 30 shown in FIG. 3, and includes but is not limited to the following steps.

Step 501: A driver development kit (DDK) parses a task.

In a DDK task parsing procedure, the DDK parses tasks that need to be executed by a multi-core processor by analyzing API invocation, and sets a dependency relationship between the tasks. After a segment of task parsing is completed, step 502 is performed.

The DDK task parsing procedure may be specifically performed by the driver development kit 32.

Step 502: Task assembly.

In a task assembly procedure, the tasks are assembled into a job chain that can be identified by the multi-core processor, a corresponding data order (desc or descriptors) is constructed, and dependency is recorded, where descriptors are a structure of data stored in a double-rate synchronous dynamic random access memory (Double Data Rate, DDR), and are used to represent various aspects of information of each job chain, for example, input data, a program segment to be used for execution, a manner to be used for processing, an output location, and an output form. After job chains are assembled, a dependency relationship between the job chains and the job chains are delivered, and step 503 and step 504 are performed simultaneously.

The task assembly procedure may be specifically performed by the driver development kit 32 or a task assembling unit 3115.

Step 503: Dependency management.

In a dependency management procedure, the dependency relationship between the job chains is maintained based on record information of a scoreboard. When execution of all other job chains on which execution of a to-be-executed job chain depends is recorded as completion in the scoreboard, a dependency relationship of the to-be-executed job chain is released.

The dependency management procedure may be specifically performed by a dependency management unit 3111, and the scoreboard is located in a multi-core management unit 3114.

Step 504: Task queue.

In a task queue procedure, after the dependency relationship of the to-be-executed job chain is released, the to-be-executed job chain is delivered, and step 505 and step 506 are performed simultaneously.

The task queue procedure may be specifically performed by a task queue unit 3112.

Step 505: Multi-core management.

In a multi-core management procedure, dynamic preemption and dynamic release operations of multiple processing cores of the multi-core processor are performed. After the scoreboard records that a processing core completes all tasks in a job chain, the processing core is released immediately, the processing core is re-applied for to execute the to-be-executed job chain, and step 506 is performed. Specifically, a quantity of tasks obtained by splitting a job chain may be the same as or different from a quantity of processing cores. When the quantity of tasks obtained by splitting the job chain is greater than the quantity of processing cores, there is at least one processing core needing to execute two or more tasks in the job chain. For the processing core that needs to execute two or more tasks in the job chain, the processing core is released only after execution of the last task in the job chain is completed. For a processing core that executes only one task in the job chain, the task in the job chain executed by the processing core is the last task in the job chain.

The multi-core management procedure may be specifically performed by the multi-core management unit 3114.

Step 506: Task splitting.

In a task splitting procedure, the to-be-executed job chain is split into one or more tasks, and the tasks are delivered to the processing core that is applied for preemption for the to-be-executed job chain in step 505, to implement task computing. After the one or more tasks obtained through splitting are delivered, step 507 and step 508 are performed simultaneously.

The task splitting procedure may be specifically performed by a task splitting unit 3113.

Step 507: Scoreboard.

The scoreboard records a task delivered to each processing core and a job chain to which the task belongs, and determines, based on information returned by a processing core, whether a task in a job chain on the processing core is completed. If the task is completed, dynamic release and dynamic preemption of the processing core in step 505 are performed.

The scoreboard is located in the multi-core management unit 3114, and a scoreboard procedure may be specifically performed by the multi-core management unit 3114.

Step 508: Multi-core execution.

In a multi-core execution procedure, computing execution of a task is implemented. Each processing core executes a task independently. After completing each task, each processing core returns a response to the scoreboard.

The multi-core execution procedure may be specifically performed by the processing core 312.

In this embodiment of this application, a job manager manages dependency between job chains of a same type. The dependency between the job chains needs to be managed on hardware, and not managed on a software (DDK) side. In other words, the hardware implements dependency management of the job chains, and the DDK does not need to participate in control. In this way, interaction time of software and hardware is shortened, and invocation on the software side is omitted. In addition, the hardware quickly makes a response, and can immediately schedule a new job chain for delivery after a dependency relationship is released. This is better than management on the software side.

In this embodiment of this application, the job manager implements fine-grained dynamic release and dynamic preemption operations of the processing core. After completing the last task in a job chain, a processing core is immediately released and re-preempted to execute the to-be-executed job chain, to reduce or eliminate no-load phenomenon of a processing core through fine-grained management. In other words, the hardware implements fine-grained release and preemption of multiple cores of the multi-core processor, and each processing core is independently managed. After completing a task that is in a job chain and that needs to be executed by a processing core, the processing core is immediately released, and a computing resource for another job chain is re-applied for. Compared with unified release and application operations performed on multiple cores by using a job chain as a boundary or strength, this management manner greatly reduces or even eliminates a no-load problem of a part of processing cores, and improves processing core utilization efficiency.

In this embodiment of this application, the job manager implements cross-job chain and cross-process dynamic scheduling of processing cores, so that the processing cores are not in a no-load state. After a task in a job chain is delivered, if the job chain and a next job chain have no dependency, the next job chain can be executed immediately without waiting for completion of the job chain. In other words, the hardware implements cross-job chain and cross-process dynamic scheduling, and can effectively reduce a no-load problem of the processing core in a same process or between different processes. This is better than management on the software side.

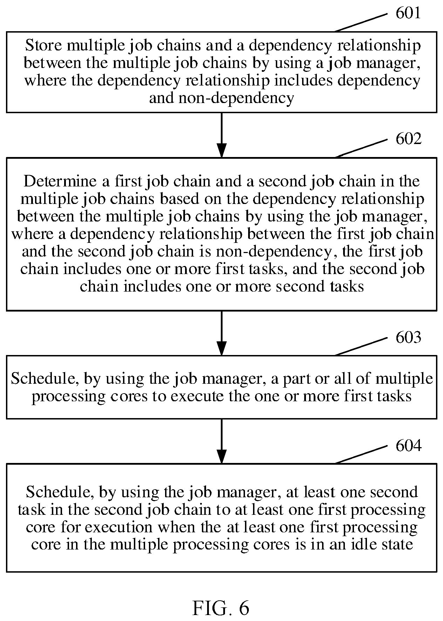

FIG. 6 shows a multi-core processor processing method according to an embodiment of this application. The method is applied to a multi-core processor. The multi-core processor includes a job manager and multiple processing cores coupled to the job manager. In addition, the multi-core processor processing method is applicable to any multi-core processor in FIG. 3 to FIG. 5 and a device (such as a mobile phone, a computer, or a server) that includes the multi-core processor. The method may include but not limited to step 601 to step 604.

Step 601: Store multiple job chains and a dependency relationship between the multiple job chains by using the job manager, where the dependency relationship includes dependency and non-dependency.

Step 602: Determine a first job chain and a second job chain in the multiple job chains based on the dependency relationship between the multiple job chains by using the job manager, where a dependency relationship between the first job chain and the second job chain is non-dependency, the first job chain includes one or more first tasks, and the second job chain includes one or more second tasks.

Step 603: Schedule, by using the job manager, a part or all of the multiple processing cores to execute the one or more first tasks.

Step 604: Schedule, by using the job manager, at least one second task in the second job chain to at least one first processing core for execution when the at least one first processing core in the multiple processing cores is in an idle state.

In a possible implementation, the job manager includes a dependency management unit and a task queue unit; the storing a dependency relationship between the multiple job chains by using the job manager includes: storing the dependency relationship between the multiple job chains by using the dependency management unit in the job manager; and the determining a first job chain and a second job chain in the multiple job chains based on the dependency relationship between the multiple job chains by using the job manager includes: sending a first instruction to the task queue unit by using the dependency management unit in the job manager if determining, by using the dependency management unit in the job manager, that the dependency relationship between the first job chain and the second job chain is non-dependency, where the first instruction indicates that the dependency relationship between the first job chain and the second job chain is non-dependency.

In a possible implementation, the job manager further includes a task splitting unit and a multi-core management unit; the storing multiple job chains by using the job manager includes: storing the multiple job chains by using the task queue unit in the job manager; and the determining a first job chain and a second job chain in the multiple job chains based on the dependency relationship between the multiple job chains by using the job manager further includes: after receiving, by using the task queue unit in the job manager, the first instruction sent by using the dependency management unit in the job manager, sending the first job chain and the second job chain to the task splitting unit by using the task queue unit in the job manager, and sending a second instruction to the multi-core management unit, where the second instruction indicates the multi-core management unit to preempt a processing core for the first job chain and the second job chain.

In a possible implementation, the scheduling, by using the job manager, a part or all of the multiple processing cores to execute the one or more first tasks includes: splitting the first job chain into the one or more first tasks by using the task splitting unit in the job manager; preempting one or more second processing cores from the multiple processing cores based on the second instruction by using the multi-core management unit in the job manager; sending, to the task splitting unit by using the multi-core management unit in the job manager, a result of preempting the one or more second processing cores; and scheduling, by using the task splitting unit in the job manager, the one or more second processing cores to execute the one or more first tasks.

In a possible implementation, the scheduling, by using the job manager, at least one second task in the second job chain to at least one first processing core for execution when the at least one first processing core in the multiple processing cores is in an idle state includes: splitting the second job chain into the one or more second tasks by using the task splitting unit in the job manager; preempting the at least one first processing core based on the second instruction by using the multi-core management unit in the job manager when the at least one first processing core in the multiple processing cores is in the idle state; sending, to the task splitting unit by using the multi-core management unit in the job manager, a result of preempting the at least one first processing core; and scheduling, by using the task splitting unit in the job manager, the at least one second task in the one or more second tasks to the at least one first processing core for execution.

In a possible implementation, the job manager further includes a task assembling unit; and the method further includes: obtaining a command stream and a dependency relationship between a part or all of the multiple job chains by using the task assembling unit in the job manager, and generating the part or all of the multiple job chains based on the command stream; and sending the part or all of the multiple job chains to the task queue unit by using the task assembling unit in the job manager, and sending the dependency relationship between the part or all of the multiple job chains to the dependency management unit.

It should be noted that, for a specific procedure of the multi-core processor processing method described in FIG. 6, refer to the related descriptions in embodiments of this application described in FIG. 3 to FIG. 5. Details are not described herein again.

In this embodiment of this application, the multi-core processor includes the job manager and the multiple processing cores coupled to the job manager. A dependency relationship between job chains may be maintained by using the job manager, in other words, the dependency relationship between the multiple job chains may be stored, and the multiple job chains are further stored by using the job manager. In this way, the first job chain and the second job chain whose dependency relationship is non-dependency may be determined in the multiple job chains by using the job manager. The first job chain includes the one or more first tasks, the second job chain includes the one or more second tasks, and the part or all of the multiple processing cores may be scheduled by using the job manager to execute the one or more first tasks in the first job chain. Because the dependency relationship between the first job chain and the second job chain is non-dependency, the first job chain and the second job chain may be executed concurrently, or the first task in the first job chain and the second task in the second job chain may be executed concurrently. The at least one second task in the second job chain may be scheduled by using the job manager to the at least one first processing core for execution when the at least one first processing core in the multiple processing cores is in the idle state. In this way, in this embodiment of this application, once a processing core is in a no-load state, the processing core in the no-load state is immediately scheduled by the job manager to execute a task, to improve multi-core scheduling performance.

This application further provides a semiconductor chip, which may include the multi-core processor provided in any implementation in the foregoing embodiments.

This application further provides a semiconductor chip, which may include the multi-core processor provided in any implementation in the foregoing embodiments, and an internal memory and an external memory that are coupled to the multi-core processor.

This application further provides a system-on-chip SoC chip. The SoC chip includes the multi-core processor provided in any implementation in the foregoing embodiments, and an internal memory and an external memory that are coupled to the multi-core processor. The SoC chip may include a chip, or may include a chip and another discrete component.

This application further provides a chip system. The chip system includes the multi-core processor provided in any implementation in the foregoing embodiments. In a possible design, the chip system further includes a memory, and the memory is configured to store necessary or related program instructions and data in a running process of the multi-core processor. The chip system may include a chip, or may include a chip and another discrete component.

This application further provides a processing apparatus. The processing apparatus has a function of implementing any multi-core processor processing method in the foregoing method embodiments. The function may be implemented by hardware, or may be implemented by hardware executing corresponding software. The hardware or the software includes one or more modules corresponding to the function.

This application further provides a terminal. The terminal includes a multi-core processor, and the multi-core processor is the multi-core processor provided in any implementation in the foregoing embodiments. The terminal may further include a memory. The memory is configured to be coupled to the multi-core processor, and store program instructions and data that are necessary for the terminal. The terminal may further include a communication interface, used by the terminal to communicate with another device or a communication network.

An embodiment of this application further provides a computer-readable storage medium. The computer-readable storage medium may store a program. When the program is executed by a multi-core processor, a part or all of the steps in any implementation recoded in the foregoing method embodiments are performed.

An embodiment of this application further provides a computer program. The computer program includes instructions. When the computer program is executed by a multi-core processor, the multi-core processor is enabled to perform a part or all of the steps of any multi-core processor processing method recorded in the foregoing method embodiments.

In the foregoing embodiments, the description of each embodiment has its emphasis, and for parts that are not described in detail in an embodiment, refer to the relevant description of other embodiments.

It should be noted that, for brief description, the foregoing method embodiments are represented as a series of action combinations. However, a person skilled in the art should understand that this application is not limited to the described action sequence, because some steps may be performed in other sequences or simultaneously according to this application. In addition, a person skilled in the art should also be aware that the described embodiments all belong to preferable embodiments, and the involved actions and modules are not necessarily required by this application.

In the several embodiments provided in this application, it should be understood that the disclosed apparatus may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, or a network device, and may specifically be a processor in a computer device) to perform all or a part of the steps of the foregoing methods described in embodiments of this application. The foregoing storage medium may include various media that can store program code, such as a USB flash drive, a removable hard disk, a magnetic disk, an optical disc, and a read-only memory (Read-Only Memory, abbreviated: ROM) or a random access memory (Random Access Memory, abbreviated: RAM).

The foregoing embodiments are merely used to describe the technical solutions of this application, but not to limit the technical solutions. Although this application is described in detail with reference to the foregoing embodiments, a person of ordinary skill in the art should understand that, the technical solutions described in the foregoing embodiments may still be modified, or some technical features thereof may be equivalently replaced.

## Claims

1. A multi-core processor, comprising a job manager (311) and multiple processing cores (312) coupled to the job manager, wherein
the job manager is configured to store multiple job chains and a dependency relationship between the multiple job chains, wherein the dependency relationship comprises dependency and non-dependency; and
the job manager is further configured to:
determine a first job chain and a second job chain in the multiple job chains based on the dependency relationship between the multiple job chains, wherein a dependency relationship between the first job chain and the second job chain is non-dependency, the first job chain comprises one or more first tasks, and the second job chain comprises one or more second tasks;
schedule a part or all of the multiple processing cores to execute the one or more first tasks; and
schedule at least one second task in the second job chain to at least one first processing core for execution when the at least one first processing core in the multiple processing cores is in an idle state,
wherein the job manager comprises a dependency management unit (3111) and a task queue unit (3112), wherein
the dependency management unit is configured to: store the dependency relationship between the multiple job chains; and send a first instruction to the task queue unit if determining that the dependency relationship between the first job chain and the second job chain is non-dependency, wherein the first instruction indicates that the dependency relationship between the first job chain and the second job chain is non-dependency,
wherein the dependency management is implemented in hardware.

2. The multi-core processor according to claim 1, wherein the job manager further comprises a task splitting unit (3113) and a multi-core management unit (3114), wherein
the task queue unit is configured to: store the multiple job chains; and after receiving the first instruction sent by the dependency management unit, send the first job chain and the second job chain to the task splitting unit, and send a second instruction to the multi-core management unit, wherein the second instruction indicates the multi-core management unit to preempt a processing core for the first job chain and the second job chain.

3. The multi-core processor according to claim 2, wherein
the task splitting unit is configured to split the first job chain into the one or more first tasks;
the multi-core management unit is configured to: preempt one or more second processing cores from the multiple processing cores based on the second instruction; and send, to the task splitting unit, a result of preempting the one or more second processing cores; and
the task splitting unit is further configured to schedule the one or more second processing cores to execute the one or more first tasks.

4. The multi-core processor according to claim 3, wherein
the task splitting unit is further configured to split the second job chain into the one or more second tasks;
the multi-core management unit is further configured to: preempt the at least one first processing core based on the second instruction when the at least one first processing core in the multiple processing cores is in the idle state; and send, to the task splitting unit, a result of preempting the at least one first processing core; and
the task splitting unit is further configured to schedule the at least one second task in the one or more second tasks to the at least one first processing core for execution.

5. The multi-core processor according to any one of claims 1 to 4, wherein the job manager further comprises a task assembling unit (3115), wherein
the task assembling unit is configured to: obtain a command stream and a dependency relationship between a part or all of the multiple job chains, and generate the part or all of the multiple job chains based on the command stream; and send the part or all of the multiple job chains to the task queue unit, and send the dependency relationship between the part or all of the multiple job chains to the dependency management unit.

6. A multi-core processor processing method, applied to a multi-core processor, wherein the multi-core processor comprises a job manager and multiple processing cores coupled to the job manager; and the method comprises:
storing (S601) multiple job chains and a dependency relationship between the multiple job chains by using the job manager, wherein the dependency relationship comprises dependency and non-dependency;
determining (S602) a first job chain and a second job chain in the multiple job chains based on the dependency relationship between the multiple job chains by using the job manager, wherein a dependency relationship between the first job chain and the second job chain is non-dependency, the first job chain comprises one or more first tasks, and the second job chain comprises one or more second tasks;
scheduling (S603), by using the job manager, a part or all of the multiple processing cores to execute the one or more first tasks; and
scheduling (S604), by using the job manager, at least one second task in the second job chain to at least one first processing core for execution when the at least one first processing core in the multiple processing cores is in an idle state,
wherein the job manager comprises a dependency management unit and a task queue unit;
the storing a dependency relationship between the multiple job chains by using the job manager comprises:
storing the dependency relationship between the multiple job chains by using the dependency management unit in the job manager; and
the determining a first job chain and a second job chain in the multiple job chains based on the dependency relationship between the multiple job chains by using the job manager comprises:
sending a first instruction to the task queue unit by using the dependency management unit in the job manager if determining, by using the dependency management unit in the job manager, that the dependency relationship between the first job chain and the second job chain is non-dependency, wherein the first instruction indicates that the dependency relationship between the first job chain and the second job chain is non-dependency,
wherein the dependency management is implemented in hardware.

7. The method according to claim 6, wherein the job manager further comprises a task splitting unit and a multi-core management unit;
the storing multiple job chains by using the job manager comprises:
storing the multiple job chains by using the task queue unit in the job manager; and
the determining a first job chain and a second job chain in the multiple job chains based on the dependency relationship between the multiple job chains by using the job manager further comprises:
after receiving, by using the task queue unit in the job manager, the first instruction sent by using the dependency management unit in the job manager, sending the first job chain and the second job chain to the task splitting unit by using the task queue unit in the job manager, and sending a second instruction to the multi-core management unit, wherein the second instruction indicates the multi-core management unit to preempt a processing core for the first job chain and the second job chain.

8. The method according to claim 7, wherein the scheduling, by using the job manager, a part or all of the multiple processing cores to execute the one or more first tasks comprises:
splitting the first job chain into the one or more first tasks by using the task splitting unit in the job manager;
preempting one or more second processing cores from the multiple processing cores based on the second instruction by using the multi-core management unit in the job manager;
sending, to the task splitting unit by using the multi-core management unit in the job manager, a result of preempting the one or more second processing cores; and
scheduling, by using the task splitting unit in the job manager, the one or more second processing cores to execute the one or more first tasks.

9. The method according to claim 8, wherein the scheduling, by using the job manager, at least one second task in the second job chain to at least one first processing core for execution when the at least one first processing core in the multiple processing cores is in an idle state comprises:
splitting the second job chain into the one or more second tasks by using the task splitting unit in the job manager;
preempting the at least one first processing core based on the second instruction by using the multi-core management unit in the job manager when the at least one first processing core in the multiple processing cores is in the idle state;
sending, to the task splitting unit by using the multi-core management unit in the job manager, a result of preempting the at least one first processing core; and
scheduling, by using the task splitting unit in the job manager, the at least one second task in the one or more second tasks to the at least one first processing core for execution.

10. The method according to any one of claims 6 to 9, wherein the job manager further comprises a task assembling unit; and the method further comprises:
obtaining a command stream and a dependency relationship between a part or all of the multiple job chains by using the task assembling unit in the job manager, and generating the part or all of the multiple job chains based on the command stream; and
sending the part or all of the multiple job chains to the task queue unit by using the task assembling unit in the job manager, and sending the dependency relationship between the part or all of the multiple job chains to the dependency management unit.

11. A computer-readable storage medium, wherein the computer-readable storage medium stores a computer program, and when the computer program is executed by a multi-core processor, the method according to any one of claims 6 to 10 is implemented.

12. A computer program, wherein the computer-readable program comprises instructions, and when the computer program is executed by a multi-core processor, the multi-core processor is enabled to perform the method according to any one of claims 6 to 10.

## Patentansprüche

1. Mehrkernprozessor, der einen Job-Manager (311) und mehrere Verarbeitungskerne (312), die an den Job-Manager gekoppelt sind, umfasst, wobei
der Job-Manager konfiguriert ist, um mehrere Job-Ketten und eine Abhängigkeitsbeziehung zwischen den mehreren Job-Ketten zu speichern, wobei die Abhängigkeitsbeziehung Abhängigkeit und Nicht-Abhängigkeit umfasst; und
der Job-Manager ferner konfiguriert ist zum:
Bestimmen einer ersten Job-Kette und einer zweiten Job-Kette in den mehreren Job-Ketten basierend auf der Abhängigkeitsbeziehung zwischen den mehreren Job-Ketten, wobei eine Abhängigkeitsbeziehung zwischen der ersten Job-Kette und der zweiten Job-Kette die Nicht-Abhängigkeit ist, die erste Job-Kette eine oder mehrere erste Aufgaben umfasst und die zweite Job-Kette eine oder mehrere zweite Aufgaben umfasst;
Einplanen eines Teils oder alle der mehreren Verarbeitungskerne, um die eine oder die mehreren ersten Aufgaben auszuführen; und
Einplanen mindestens einer zweiten Aufgabe in der zweiten Job-Kette für mindestens einen ersten Verarbeitungskern für die Ausführung, wenn sich der mindestens eine erste Verarbeitungskern der mehreren Verarbeitungskerne in einem Ruhezustand befindet, wobei der Job-Manager eine Abhängigkeitsmanagementeinheit (3111) und eine Aufgabenwarteschlangeneinheit (3112) umfasst, wobei
die Abhängigkeitsmanagementeinheit konfiguriert ist zum: Speichern der Abhängigkeitsbeziehung zwischen den mehreren Job-Ketten; und Senden einer ersten Anweisung an die Aufgabenwarteschlangeneinheit, falls bestimmt wird, dass die Abhängigkeitsbeziehung zwischen der ersten Job-Kette und der zweiten Job-Kette die Nicht-Abhängigkeit ist, wobei die erste Anweisung angibt, dass die Abhängigkeitsbeziehung zwischen der ersten Job-Kette und der zweiten Job-Kette die Nicht-Abhängigkeit ist,
wobei das Abhängigkeitsmanagement in Hardware implementiert ist.

2. Mehrkernprozessor nach Anspruch 1, wobei der Job-Manager ferner eine Aufgabenaufteilungseinheit (3113) und eine Mehrkernmanagementeinheit (3114) umfasst, wobei
die Aufgabenwarteschlangeneinheit konfiguriert ist zum: Speichern der mehreren Job-Ketten; und nach dem Empfangen der ersten Anweisung, die durch die Abhängigkeitsmanagementeinheit gesendet wird, Senden der ersten Job-Kette und der zweiten Job-Kette an die Aufgabenaufteilungseinheit, und Senden einer zweiten Anweisung an die Mehrkernmanagementeinheit, wobei die zweite Anweisung der Mehrkernmanagementeinheit angibt, einen Verarbeitungskern für die erste Job-Kette und die zweite Job-Kette vorzubelegen.

3. Mehrkernprozessor nach Anspruch 2, wobei
die Aufgabenaufteilungseinheit konfiguriert ist, um die erste Job-Kette in die eine oder die mehreren ersten Aufgaben aufzuteilen;
die Mehrkernmanagementeinheit konfiguriert ist zum: Vorbelegen des einen oder der mehreren zweiten Verarbeitungskerne von den mehreren Verarbeitungskernen basierend auf der zweiten Anweisung; und Senden, an die Aufgabenaufteilungseinheit, eines Ergebnisses des Vorbelegens des einen oder der mehreren zweiten Verarbeitungskerne; und
die Aufgabenaufteilungseinheit ferner konfiguriert ist, um den einen oder die mehreren zweiten Verarbeitungskerne einzuplanen, um die eine oder die mehreren ersten Aufgaben auszuführen.

4. Mehrkernprozessor nach Anspruch 3, wobei
die Aufgabenaufteilungseinheit ferner konfiguriert ist, um die zweite Job-Kette in die eine oder die mehreren zweiten Aufgaben aufzuteilen;
die Mehrkernmanagementeinheit ferner konfiguriert ist zum: Vorbelegen des mindestens einen ersten Verarbeitungskerns basierend auf der zweiten Anweisung, wenn sich der mindestens eine erste Verarbeitungskern in den mehreren Verarbeitungskernen in dem Ruhezustand befindet; und Senden, an die Aufgabenaufteilungseinheit, eines Ergebnisses des Vorbelegens des mindestens einen ersten Verarbeitungskerns; und
die Aufgabenaufteilungseinheit ferner konfiguriert ist, um die mindestens eine zweite Aufgabe in der einen oder den mehreren zweiten Aufgaben dem mindestens einen ersten Verarbeitungskern für die Ausführung einzuplanen.

5. Mehrkernprozessor nach einem der Ansprüche 1 bis 4, wobei der Job-Manager ferner eine Aufgabenzusammenstellungseinheit (3115) umfasst, wobei
die Aufgabenzusammenstellungseinheit konfiguriert ist zum: Erhalten eines Befehlsstroms und einer Abhängigkeitsbeziehung zwischen einem Teil oder allen der mehreren Job-Ketten, und Erzeugen des Teils oder aller der mehreren Job-Ketten basierend auf dem Befehlsstrom; und Senden des Teils oder aller der mehreren Job-Ketten an die Aufgabenwarteschlangeneinheit und Senden der Abhängigkeitsbeziehung zwischen dem Teil oder allen der mehreren Job-Ketten an die Abhängigkeitsmanagementeinheit.

6. Mehrkernprozessorverarbeitungsverfahren, das auf einen Mehrkernprozessor angewendet wird, wobei der Mehrkernprozessor einen Job-Manager und mehrere Verarbeitungskerne, die an den Job-Manager gekoppelt sind, umfasst; und das Verfahren umfasst:
Speichern (S601) mehrerer Job-Ketten und einer Abhängigkeitsbeziehung zwischen den mehreren Job-Ketten durch Verwenden des Job-Managers, wobei die Abhängigkeitsbeziehung Abhängigkeit und Nicht-Abhängigkeit umfasst;
Bestimmen (S602) einer ersten Job-Kette und einer zweiten Job-Kette in den mehreren Job-Ketten basierend auf der Abhängigkeitsbeziehung zwischen den mehreren Job-Ketten durch Verwenden des Job-Managers, wobei eine Abhängigkeitsbeziehung zwischen der ersten Job-Kette und der zweiten Job-Kette die Nicht-Abhängigkeit ist, die erste Job-Kette eine oder mehrere erste Aufgaben umfasst und die zweite Job-Kette eine oder mehrere zweite Aufgaben umfasst;
Einplanen (S603), durch Verwenden des Job-Managers, eines Teils oder aller der mehreren Verarbeitungskerne, um die eine oder die mehreren ersten Aufgaben auszuführen; und
Einplanen (S604), durch Verwenden des Job-Managers, mindestens einer zweiten Aufgabe in der zweiten Job-Kette für mindestens einen ersten Verarbeitungskern für die Ausführung, wenn sich der mindestens eine erste Verarbeitungskern in den mehreren Verarbeitungskernen in einem Ruhezustand befindet,
wobei der Job-Manager eine Abhängigkeitsmanagementeinheit und eine Aufgabenwarteschlangeneinheit umfasst;
das Speichern einer Abhängigkeitsbeziehung zwischen den mehreren Job-Ketten durch Verwenden des Job-Managers umfasst:
Speichern der Abhängigkeitsbeziehung zwischen den mehreren Job-Ketten durch Verwenden der Abhängigkeitsmanagementeinheit in dem Job-Manager; und
das Bestimmen einer ersten Job-Kette und einer zweiten Job-Kette in den mehreren Job-Ketten basierend auf der Abhängigkeitsbeziehung zwischen den mehreren Job-Ketten durch Verwenden des Job-Managers umfasst:
Senden einer ersten Anweisung an die Aufgabenwarteschlangeneinheit durch Verwenden der Abhängigkeitsmanagementeinheit in dem Job-Manager, falls durch Verwenden der Abhängigkeitsmanagementeinheit in dem Job-Manager bestimmt wird, dass die Abhängigkeitsbeziehung zwischen der ersten Job-Kette und der zweiten Job-Kette die Nicht-Abhängigkeit ist, wobei die erste Anweisung angibt, dass die Abhängigkeitsbeziehung zwischen der ersten Job-Kette und der zweiten Job-Kette die Nicht-Abhängigkeit ist,
wobei das Abhängigkeitsmanagement in Hardware implementiert ist.

7. Verfahren nach Anspruch 6, wobei der Job-Manager ferner eine Aufgabenaufteilungseinheit und eine Mehrkernmanagementeinheit umfasst; das Speichern mehrerer Job-Ketten durch Verwenden des Jobmanagers umfasst:
Speichern der mehreren Job-Ketten durch Verwenden der Aufgabenwarteschlangeneinheit in dem Job-Manager; und
das Bestimmen einer ersten Job-Kette und einer zweiten Job-Kette in den mehreren Job-Ketten basierend auf der Abhängigkeitsbeziehung zwischen den mehreren Job-Ketten durch Verwenden des Job-Managers ferner umfasst:
nach dem Empfangen, durch Verwenden der Aufgabenwarteschlangeneinheit in dem Job-Manager, der ersten Anweisung, die durch Verwenden der Abhängigkeitsmanagementeinheit in dem Job-Manager gesendet wurde, Senden der ersten Job-Kette und der zweiten Job-Kette an die Aufgabenaufteilungseinheit durch Verwenden der Aufgabenwarteschlangeneinheit in dem Job-Manager und Senden einer zweiten Anweisung an die Mehrkernmanagementeinheit, wobei die zweite Anweisung der Mehrkernmanagementeinheit angibt, einen Verarbeitungskern für die erste Job-Kette und die zweite Job-Kette vorzubelegen.

8. Verfahren nach Anspruch 7, wobei das Einplanen, durch Verwenden des Job-Managers, eines Teils oder aller der mehreren Verarbeitungskerne, um die eine oder die mehreren ersten Aufgaben auszuführen, umfasst:
Aufteilen der ersten Job-Kette in die eine oder die mehreren ersten Aufgaben durch Verwenden der Aufgabenaufteilungseinheit in dem Job-Manager;
Vorbelegen eines oder mehrerer zweiter Verarbeitungskerne aus den mehreren Verarbeitungskernen basierend auf der zweiten Anweisung durch Verwenden der Mehrkernmanagementeinheit in dem Job-Manager;
Senden, an die Aufgabenaufteilungseinheit durch Verwenden der Mehrkernmanagementeinheit in dem Job-Manager, eines Ergebnisses des Vorbelegens des einen oder der mehreren zweiten Verarbeitungskerne; und
Einplanen, durch Verwenden der Aufgabenaufteilungseinheit in dem Job-Manager, des einen oder der mehreren zweiten Verarbeitungskerne, um die eine oder die mehreren ersten Aufgaben auszuführen.

9. Verfahren nach Anspruch 8, wobei das Einplanen, durch Verwenden des Job-Managers, mindestens einer zweiten Aufgabe in der zweiten Job-Kette für mindestens einen ersten Verarbeitungskern für die Ausführung, wenn sich der mindestens eine erste Verarbeitungskern in den mehreren Verarbeitungskernen in einem Ruhezustand befindet, umfasst:
Aufteilen der zweiten Job-Kette in die eine oder die mehreren zweiten Aufgaben durch Verwenden der Aufgabenaufteilungseinheit in dem Job-Manager;
Vorbelegen des mindestens einen ersten Verarbeitungskerns basierend auf der zweiten Anweisung durch Verwenden der Mehrkernmanagementeinheit in dem Job-Manager, wenn sich der mindestens eine erste Verarbeitungskern in den mehreren Verarbeitungskernen in dem Ruhezustand befindet;
Senden, an die Aufgabenaufteilungseinheit durch Verwenden der Mehrkernmanagementeinheit in dem Job-Manager, eines Ergebnisses des Vorbelegens des mindestens einen ersten Verarbeitungskerns; und
Einplanen, durch Verwenden der Aufgabenaufteilungseinheit in dem Job-Manager, der mindestens einen zweiten Aufgabe in der einen oder den mehreren zweiten Aufgaben für den mindestens einen ersten Verarbeitungskern für die Ausführung.

10. Verfahren nach einem der Ansprüche 6 bis 9, wobei der Job-Manager ferner eine Aufgabenzusammenstellungseinheit umfasst; und das Verfahren ferner umfasst:
Erhalten eines Befehlsstroms und einer Abhängigkeitsbeziehung zwischen einem Teil oder allen der mehreren Job-Ketten durch Verwenden der Aufgabenzusammenstellungseinheit in dem Job-Manager, und Erzeugen des Teils oder aller der mehreren Job-Ketten basierend auf dem Befehlsstrom; und
Senden des Teils oder aller der mehreren Job-Ketten an die Aufgabenwarteschlangeneinheit durch Verwenden der Aufgabenzusammenstellungseinheit in dem Job-Manager und Senden der Abhängigkeitsbeziehung zwischen dem Teil oder allen der mehreren Job-Ketten an die Abhängigkeitsmanagementeinheit.

11. Computerlesbares Speichermedium, wobei das computerlesbare Speichermedium ein Computerprogramm speichert, und wenn das Computerprogramm durch einen Mehrkernprozessor ausgeführt wird, das Verfahren nach einem der Ansprüche 6 bis 10 implementiert wird.

12. Computerprogramm, wobei das computerlesbare Programm Anweisungen umfasst, und wenn das Computerprogramm durch einen Mehrkernprozessor ausgeführt wird, der Mehrkernprozessor aktiviert wird, um das Verfahren nach einem der Ansprüche 6 bis 10 durchzuführen.

## Revendications

1. Processeur multicœur, comprenant un gestionnaire de tâches (311) et de multiples cœurs de traitement (312) couplés au gestionnaire de tâches, dans lequel
le gestionnaire de tâches est configuré pour stocker de multiples chaînes de tâches et une relation de dépendance entre les multiples chaînes de tâches, dans lequel la relation de dépendance comprend une dépendance et une non-dépendance ; et
le gestionnaire de tâches est en outre configuré pour :
déterminer une première chaîne de tâches et une seconde chaîne de tâches parmi les multiples chaînes de tâches sur la base de la relation de dépendance entre les multiples chaînes de tâches, dans lequel une relation de dépendance entre la première chaîne de tâches et la seconde chaîne de tâches est une non-dépendance, la première chaîne de tâches comprend une ou plusieurs premières tâches, et la seconde chaîne de tâches comprend une ou plusieurs secondes tâches ;
planifier une partie ou la totalité des multiples cœurs de traitement pour exécuter la ou les premières tâches ; et
planifier au moins une seconde tâche parmi la seconde chaîne de tâches sur au moins un premier cœur de traitement pour exécution lorsque l'au moins un premier cœur de traitement parmi les multiples cœurs de traitement est dans un état inactif, dans lequel le gestionnaire de tâches comprend une unité de gestion de dépendance (3111) et une unité de file d'attente de tâches (3112), dans lequel l'unité de gestion de dépendance est configurée pour : stocker la relation de dépendance entre les multiples chaînes de tâches ; et envoyer une première instruction à l'unité de file d'attente de tâches s'il est déterminé que la relation de dépendance entre la première chaîne de tâches et la seconde chaîne de tâches est une non-dépendance, dans lequel la première instruction indique que la relation de dépendance entre la première chaîne de tâches et la seconde chaîne de tâches est une non-dépendance, dans lequel la gestion de dépendance est mise en œuvre dans un matériel.

2. Processeur multicœur selon la revendication 1, dans lequel le gestionnaire de tâches comprend en outre une unité de division de tâches (3113) et une unité de gestion multicœur (3114), dans lequel
l'unité de file d'attente de tâches est configurée pour : stocker les multiples chaînes de tâches ; et après réception de la première instruction envoyée par l'unité de gestion de dépendance, envoyer la première chaîne de tâches et la seconde chaîne de tâches à l'unité de division de tâches, et envoyer une seconde instruction à l'unité de gestion multicœur, dans lequel la seconde instruction indique à l'unité de gestion multicœur de préempter un cœur de traitement pour la première chaîne de tâches et la seconde chaîne de tâches.

3. Processeur multicœur selon la revendication 2, dans lequel
l'unité de division de tâches est configurée pour diviser la première chaîne de tâches en la ou les premières tâches ;
l'unité de gestion multicœur est configurée pour : préempter un ou plusieurs seconds cœurs de traitement parmi les multiples cœurs de traitement sur la base de la seconde instruction ; et envoyer, à l'unité de division de tâches, un résultat de préemption du ou des seconds cœurs de traitement ; et
l'unité de division de tâches est en outre configurée pour planifier le ou les seconds cœurs de traitement afin d'exécuter la ou les premières tâches.

4. Processeur multicœur selon la revendication 3, dans lequel
l'unité de division de tâches est en outre configurée pour diviser la seconde chaîne de tâches en la ou les secondes tâches ;
l'unité de gestion multicœur est en outre configurée pour : préempter l'au moins un premier cœur de traitement sur la base de la seconde instruction lorsque l'au moins un premier cœur de traitement parmi les multiples cœurs de traitement est dans l'état inactif ; et envoyer, à l'unité de division de tâches, un résultat de préemption de l'au moins un premier cœur de traitement ; et
l'unité de division de tâches est en outre configurée pour planifier l'au moins une seconde tâche parmi la ou les secondes tâches sur l'au moins un premier cœur de traitement pour exécution.

5. Processeur multicœur selon l'une quelconque des revendications 1 à 4, dans lequel le gestionnaire de tâches comprend en outre une unité d'assemblage de tâches (3115), dans lequel
l'unité d'assemblage de tâches est configurée pour : obtenir un flux de commandes et une relation de dépendance entre une partie ou la totalité des multiples chaînes de tâches, et générer la partie ou la totalité des multiples chaînes de tâches sur la base du flux de commandes ; et envoyer la partie ou la totalité des multiples chaînes de tâches à l'unité de file d'attente de tâches, et envoyer la relation de dépendance entre la partie ou la totalité des multiples chaînes de tâches à l'unité de gestion de dépendance.

6. Procédé de traitement de processeur multicœur, appliqué à un processeur multicœur, dans lequel le processeur multicœur comprend un gestionnaire de tâches et de multiples cœurs de traitement couplés au gestionnaire de tâches ; et le procédé comprend :
le stockage (S601) de multiples chaînes de tâches et d'une relation de dépendance entre les multiples chaînes de tâches en utilisant le gestionnaire de tâches, dans lequel la relation de dépendance comprend une dépendance et une non-dépendance ;
la détermination (S602) d'une première chaîne de tâches et d'une seconde chaîne de tâches parmi les multiples chaînes de tâches sur la base de la relation de dépendance entre les multiples chaînes de tâches en utilisant le gestionnaire de tâches, dans lequel une relation de dépendance entre la première chaîne de tâches et la seconde chaîne de tâches est une non-dépendance, la première chaîne de tâches comprend une ou plusieurs premières tâches, et la seconde chaîne de tâches comprend une ou plusieurs secondes tâches ;
la planification (S603), en utilisant le gestionnaire de tâches, d'une partie ou de la totalité des multiples cœurs de traitement pour exécuter la ou les premières tâches ; et
la planification (S604), en utilisant le gestionnaire de tâches, d'au moins une seconde tâche parmi la seconde chaîne de tâches sur au moins un premier cœur de traitement pour exécution lorsque l'au moins un premier cœur de traitement parmi les multiples cœurs de traitement est dans un état inactif,
dans lequel le gestionnaire de tâches comprend une unité de gestion de dépendance et une unité de file d'attente de tâches ;
le stockage d'une relation de dépendance entre les multiples chaînes de tâches en utilisant le gestionnaire de tâches comprend :
le stockage de la relation de dépendance entre les multiples chaînes de tâches en utilisant l'unité de gestion de dépendance dans le gestionnaire de tâches ; et
la détermination d'une première chaîne de tâches et d'une seconde chaîne de tâches parmi les multiples chaînes de tâches sur la base de la relation de dépendance entre les multiples chaînes de tâches en utilisant le gestionnaire de tâches comprend :
l'envoi d'une première instruction à l'unité de file d'attente de tâches en utilisant l'unité de gestion de dépendance dans le gestionnaire de tâches s'il est déterminé, en utilisant l'unité de gestion de dépendance dans le gestionnaire de tâches, que la relation de dépendance entre la première chaîne de tâches et la seconde chaîne de tâches est une non-dépendance, dans lequel la première instruction indique que la relation de dépendance entre la première chaîne de tâches et la seconde chaîne de tâches est une non-dépendance,
dans lequel la gestion de dépendance est mise en œuvre dans un matériel.

7. Procédé selon la revendication 6, dans lequel le gestionnaire de tâches comprend en outre une unité de division de tâches et une unité de gestion multicœur ;
le stockage de multiples chaînes de tâches en utilisant le gestionnaire de tâches comprend :
le stockage des multiples chaînes de tâches en utilisant l'unité de file d'attente de tâches dans le gestionnaire de tâches ; et
la détermination d'une première chaîne de tâches et d'une seconde chaîne de tâches parmi les multiples chaînes de tâches sur la base de la relation de dépendance entre les multiples chaînes de tâches en utilisant le gestionnaire de tâches comprend en outre :
après réception, en utilisant l'unité de file d'attente de tâches dans le gestionnaire de tâches, de la première instruction envoyée en utilisant l'unité de gestion de dépendance dans le gestionnaire de tâches, l'envoi de la première chaîne de tâches et de la seconde chaîne de tâches à l'unité de division de tâches en utilisant l'unité de file d'attente de tâches dans le gestionnaire de tâches, et l'envoi d'une seconde instruction à l'unité de gestion multicœur, dans lequel la seconde instruction indique à l'unité de gestion multicœur de préempter un cœur de traitement pour la première chaîne de tâches et la seconde chaîne de tâches.

8. Procédé selon la revendication 7, dans lequel la planification, en utilisant le gestionnaire de tâches, d'une partie ou de la totalité des multiples cœurs de traitement pour exécuter la ou les premières tâches comprend :
la division de la première chaîne de tâches en la ou les premières tâches en utilisant l'unité de division de tâches dans le gestionnaire de tâches ;
la préemption d'un ou plusieurs seconds cœurs de traitement parmi les multiples cœurs de traitement sur la base de la seconde instruction en utilisant l'unité de gestion multicœur dans le gestionnaire de tâches ;
l'envoi, à l'unité de division de tâches en utilisant l'unité de gestion multicœur dans le gestionnaire de tâches, d'un résultat de préemption du ou des seconds cœurs de traitement ; et
la planification, en utilisant l'unité de division de tâches dans le gestionnaire de tâches, du ou des seconds cœurs de traitement pour exécuter la ou les premières tâches.

9. Procédé selon la revendication 8, dans lequel la planification, en utilisant le gestionnaire de tâches, d'au moins une seconde tâche parmi la seconde chaîne de tâches sur au moins un premier cœur de traitement pour exécution lorsque l'au moins un premier cœur de traitement parmi les multiples cœurs de traitement est dans un état inactif comprend :
la division de la seconde chaîne de tâches en la ou les secondes tâches en utilisant l'unité de division de tâches dans le gestionnaire de tâches ;
la préemption de l'au moins un premier cœur de traitement sur la base de la seconde instruction en utilisant l'unité de gestion multicœur dans le gestionnaire de tâches lorsque l'au moins un premier cœur de traitement parmi les multiples cœurs de traitement est dans l'état inactif ;
l'envoi, à l'unité de division de tâches en utilisant l'unité de gestion multicœur dans le gestionnaire de tâches, d'un résultat de préemption de l'au moins un premier cœur de traitement ; et
la planification, en utilisant l'unité de division de tâches dans le gestionnaire de tâches, de l'au moins une seconde tâche parmi la ou les secondes tâches sur l'au moins un premier cœur de traitement pour exécution.

10. Procédé selon l'une quelconque des revendications 6 à 9, dans lequel le gestionnaire de tâches comprend en outre une unité d'assemblage de tâches ; et le procédé comprend en outre :
l'obtention d'un flux de commandes et d'une relation de dépendance entre une partie ou la totalité des multiples chaînes de tâches en utilisant l'unité d'assemblage de tâches dans le gestionnaire de tâches, et la génération de la partie ou de la totalité des multiples chaînes de tâches sur la base du flux de commandes ; et
l'envoi d'une partie ou de la totalité des multiples chaînes de tâches à l'unité de file d'attente de tâches en utilisant l'unité d'assemblage de tâches dans le gestionnaire de tâches, et l'envoi de la relation de dépendance entre la partie ou la totalité des multiples chaînes de tâches à l'unité de gestion de dépendance.

11. Support de stockage lisible par ordinateur, dans lequel le support de stockage lisible par ordinateur stocke un programme informatique, et lorsque le programme informatique est exécuté par un processeur multicœur, le procédé selon l'une quelconque des revendications 6 à 10 est mis en œuvre.

12. Programme informatique, dans lequel le programme lisible par ordinateur comprend des instructions, et lorsque le programme informatique est exécuté par un processeur multicœur, le processeur multicœur est activé pour réaliser le procédé selon l'une quelconque des revendications 6 à 10.
